(19) **Europäisches Patentamt / European Patent Office / Office européen des brevets**

(11) **EP 4 193 659 B1**

(12) **EUROPEAN PATENT SPECIFICATION**

(45) Date of publication and mention of the grant of the patent:
**01.10.2025 Bulletin 2025/40**

(21) Application number: **21852845.3**

(22) Date of filing: **04.08.2021**

(51) International Patent Classification (IPC):
**H04W 28/04** (2009.01)    **H04L 1/16** (2023.01)
**H04L 1/1829** (2023.01)

(52) Cooperative Patent Classification (CPC):
**H04L 1/1854; H04L 1/0031; H04L 1/1614;**
**H04L 1/1861;** H04L 1/0002; H04L 1/0013;
H04L 1/08

(86) International application number:
**PCT/JP2021/028891**

(87) International publication number:
**WO 2022/030528 (10.02.2022 Gazette 2022/06)**

(54) **PUCCH RESOURCE SELECTION AND MULTIPLEXING OF HARQ-ACK WITH DIFFERENT PRIORITIES ON PUCCH**

PUCCH-RESSOURCENAUSWAHL UND MULTIPLEXING VON HARQ-ACK MIT VERSCHIEDENEN PRIORITÄTEN AUF PUCCH

SÉLECTION DE RESSOURCE DE CANAL PUCCH ET MULTIPLEXAGE D'UN ACCUSÉ DE RÉCEPTION HARQ-ACK AVEC DES PRIORITÉS DIFFÉRENTES SUR UN PUCCH

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **05.08.2020 US 202063061768 P**

(43) Date of publication of application:
**14.06.2023 Bulletin 2023/24**

(73) Proprietor: **Sharp Kabushiki Kaisha**
**Sakai City, Osaka 590-8522 (JP)**

(72) Inventors:
• **YIN, Zhanping**
  **Vancouver, WA 98683 (US)**
• **YOKOMAKURA, Kazunari**
  **Sakai City, Osaka 590-8522 (JP)**
• **YING, Kai**
  **Vancouver, WA 98683 (US)**

(74) Representative: **Müller-Boré & Partner**
**Patentanwälte PartG mbB**
**Friedenheimer Brücke 21**
**80639 München (DE)**

(56) References cited:
• **MODERATOR (OPPO): "Summary of email thread [100b-e-NR-L1enh_URLLC-UCI_Enh-01]", vol. RAN WG1, no. e-Meeting; 20200420 - 20200430, 1 May 2020 (2020-05-01), XP052342851, Retrieved from the Internet <URL:https://ftp.3gpp.org/tsg_ran/WG1_RL1/TSGR1_100b_e/Docs/R1-2002783.zip R1-2002783.doc> [retrieved on 20200501]**
• **LG ELECTRONICS: "Intra-UE prioritization for NR URLLC", vol. RAN WG1, no. Athens, Greece; 20190225 - 20190301, 16 February 2019 (2019-02-16), XP051599747, Retrieved from the Internet <URL:http://www.3gpp.org/ftp/tsg%5Fran/WG1%5FRL1/TSGR1%5F96/Docs/R1%2D1902051%2Ezip> [retrieved on 20190216]**
• **OPPO: "Summary of email discussion [97-NR-05] on handling intra-UE collision scenarios for URLLC UCI enhancements", vol. RAN WG1, no. Prague, Czech; 20190826 - 20190830, 3 September 2019 (2019-09-03), XP051766094, Retrieved from the Internet <URL:http:// www.3gpp.org/ftp/tsg_ran/WG1_RL1/TSGR1_98/ Docs/R1-1909492.zip> [retrieved on 20190903]**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

- "3rd Generation Partnership Project; Technical Specification Group Radio Access Network; NR; Physical layer procedures for control (Release 16)", 3GPP DRAFT; 38213-G20, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, 15 July 2020 (2020-07-15), Mobile Competence Centre ; 650, route des Lucioles ; F-06921 Sophia-Antipolis Cedex ; France
  , XP051908760

## Description

### Technical Field

The present disclosure relates generally to communication systems. More specifically, the present disclosure relates to a user equipment, a method performed by a user equipment and a base station.

### Background Art

Wireless communication devices have become smaller and more powerful in order to meet consumer needs and to improve portability and convenience. Consumers have become dependent upon wireless communication devices and have come to expect reliable service, expanded areas of coverage and increased functionality. A wireless communication system may provide communication for a number of wireless communication devices, each of which may be serviced by a base station. A base station may be a device that communicates with wireless communication devices.

As wireless communication devices have advanced, improvements in communication capacity, speed, flexibility and/or efficiency have been sought. However, improving communication capacity, speed, flexibility, and/or efficiency may present certain problems.

For example, wireless communication devices may communicate with one or more devices using a communication structure. However, the communication structure used may only offer limited flexibility and/or efficiency. As illustrated by this discussion, systems and methods that improve communication flexibility and/or efficiency may be beneficial.

OPPO, "Summary of email thread [100b-e-NR-Llenh_URLLC-UCI_Enh-01]", 3GPP TSG RAN WG1 #100b-e, e-Meeting, April 20th - 30th, 2020, 3GPP Draft R1-2002783, discusses the issue PUCCH resource length for SR and CSI, and specifically Option 1: All *PUCCH-Resource* configured in a *PUCCH-Config* are sub-slot PUCCH resource, e.g. no longer than corresponding *subslotLengthFor PUCCH-r16, and* Option 2: Only a part of *PUCCH-Resource* configured in a *PUCCH-Config* are sub-slot PUCCH resource for HARQ-ACK, e.g. no longer than corresponding *subslotLengthFor PUCCHr16.* Other *PUCCH-Resource* not confined in the sub-slot can be used for SR and/or CSI.

OPPO, "Summary of email discussion [97-NR-05] on handling intra-UE collision scenarios for URLLC UCI enhancements", 3GPP TSG RAN WG1 #98, Prague, Czech, August 26th - 30th, 2019, 3GPP Draft R1-1909492, discusses inter alia the collision case eMBB HARQ-ACK vs. URLLC HARQ-ACK.

LG Electronics, "Intra-UE prioritization for NR URLLC", 3GPP TSG RAN WG1 Meeting #96, Athens, Greece, 25th February -1 March, 2019, 3GPP Draft R1-1902051, discusses intra-UE prioritization for NR URLLC, noting that collision handling of URLLC SR and eMBB PUCCH needs to be further investigated.

### Summary of Invention

The above and other objects are achieved by a user equipment, a method performed by a user equipment and a base station, as defined in the claims respectively.

### Brief Description of Drawings

Figure 1 is a block diagram illustrating one implementation of one or more gNBs and one or more UEs in which systems and methods for physical uplink control channel (PUCCH) resource selection and multiplexing of HARQ-ACK with different priorities on PUCCH may be implemented.
Figure 2 is a block diagram illustrating one implementation of a gNB.
Figure 3 is a block diagram illustrating one implementation of a UE.
Figure 4 illustrates various components that may be utilized in a UE.
Figure 5 illustrates various components that may be utilized in a gNB.
Figure 6 is a block diagram illustrating one implementation of a UE in which the systems and methods described herein may be implemented.
Figure 7 is a block diagram illustrating one implementation of a gNB in which the systems and methods described herein may be implemented.
Figure 8 is a flow diagram illustrating a method by a UE for PUCCH resource selection and multiplexing of HARQ-ACK with different priorities on PUCCH.
Figure 9 is a flow diagram illustrating a method by a gNB for PUCCH resource selection and multiplexing of HARQ-ACK with different priorities on PUCCH.

## Description of Embodiments

The 3rd Generation Partnership Project, also referred to as "3GPP," is a collaboration agreement that aims to define globally applicable technical specifications and technical reports for third, fourth, and fifth generation wireless communication systems. The 3GPP may define specifications for next generation mobile networks, systems, and devices.

3GPP Long Term Evolution (LTE) is the name given to a project to improve the Universal Mobile Telecommunications System (UMTS) mobile phone or device standard to cope with future requirements. In one aspect, UMTS has been modified to provide support and specification for the Evolved Universal Terrestrial Radio Access (E-UTRA) and Evolved Universal Terrestrial Radio Access Network (E-UTRAN).

At least some aspects of the systems and methods disclosed herein may be described in relation to the 3GPP LTE, LTE-Advanced (LTE-A) and other standards (e.g., 3GPP Releases 8, 9, 10, 11, 12, 13, 14, 15, 16, 17, etc.). However, the scope of the present disclosure should not be limited in this regard. At least some aspects of the systems and methods disclosed herein may be utilized in other types of wireless communication systems.

A wireless communication device may be an electronic device used to communicate voice and/or data to a base station, which in turn may communicate with a network of devices (e.g., public switched telephone network (PSTN), the Internet, etc.). In describing systems and methods herein, a wireless communication device may alternatively be referred to as a mobile station, a UE, an access terminal, a subscriber station, a mobile terminal, a remote station, a user terminal, a terminal, a subscriber unit, a mobile device, etc. Examples of wireless communication devices include cellular phones, smart phones, personal digital assistants (PDAs), laptop computers, netbooks, e-readers, wireless modems, etc. In 3GPP specifications, a wireless communication device is typically referred to as a UE. However, as the scope of the present disclosure should not be limited to the 3GPP standards, the terms "UE" and "wireless communication device" may be used interchangeably herein to mean the more general term "wireless communication device." A UE may also be more generally referred to as a terminal device.

In 3GPP specifications, a base station is typically referred to as a Node B, an evolved Node B (eNB), a home enhanced or evolved Node B (HeNB) or some other similar terminology. As the scope of the disclosure should not be limited to 3GPP standards, the terms "base station," "Node B," "eNB," "gNB" and/or "HeNB" may be used interchangeably herein to mean the more general term "base station." Furthermore, the term "base station" may be used to denote an access point. An access point may be an electronic device that provides access to a network (e.g., Local Area Network (LAN), the Internet, etc.) for wireless communication devices. The term "communication device" may be used to denote both a wireless communication device and/or a base station. An eNB may also be more generally referred to as a base station device.

It should be noted that as used herein, a "cell" may be any communication channel that is specified by standardization or regulatory bodies to be used for International Mobile Telecommunications-Advanced (IMT-Advanced) and all of it or a subset of it may be adopted by 3GPP as licensed bands (e.g., frequency bands) to be used for communication between an eNB and a UE. It should also be noted that in E-UTRA and E-UTRAN overall description, as used herein, a "cell" may be defined as "combination of downlink and optionally uplink resources." The linking between the carrier frequency of the downlink resources and the carrier frequency of the uplink resources may be indicated in the system information transmitted on the downlink resources.

"Configured cells" are those cells of which the UE is aware and is allowed by an eNB to transmit or receive information. "Configured cell(s)" may be serving cell(s). The UE may receive system information and perform the required measurements on all configured cells. "Configured cell(s)" for a radio connection may include a primary cell and/or no, one, or more secondary cell(s). "Activated cells" are those configured cells on which the UE is transmitting and receiving. That is, activated cells are those cells for which the UE monitors the physical downlink control channel (PDCCH) and in the case of a downlink transmission, those cells for which the UE decodes a physical downlink shared channel (PDSCH). "Deactivated cells" are those configured cells that the UE is not monitoring the transmission PDCCH. It should be noted that a "cell" may be described in terms of differing dimensions. For example, a "cell" may have temporal, spatial (e.g., geographical) and frequency characteristics.

Fifth generation (5G) cellular communications (also referred to as "New Radio," "New Radio Access Technology" or "NR" by 3GPP) envisions the use of time/ frequency/space resources to allow for enhanced mobile broadband (eMBB) communication and ultra-reliable low-latency communication (URLLC) services, as well as massive machine type communication (MMTC) like services. A new radio (NR) base station may be referred to as a gNB. A gNB may also be more generally referred to as a base station or base station device.

Methods are described herein to determine the maximum code rate for HARQ-ACK with low priority when separate coding for multiplexing of HARQ-ACK with different priorities is applied. For high priority HARQ-ACK, the maxCodeRate parameter can be used to determine the maximum code rate for UCI rate matching. A different maximum code rate may be applied for the low priority HARQ-ACK to provide different error protection and BER requirements. Thus, a UE can be configured with two maximum code rates for UCI multiplexing of HARQ-ACK with different priorities on a single PUCCH (selected from high priority PUCCH resources configured for URLLC).

PUCCH resource selection and multiplexing of HARQ-ACK with different priorities on PUCCH are also described herein. With different maximum code rate applied for UCIs with different priorities, this disclosure presents details of PUCCH resource selection and multiplexing of HARQ-ACK with different priorities on the selected PUCCH resource.

Various examples of the systems and methods disclosed herein are now described with reference to the Figures, where like reference numbers may indicate functionally similar elements. The systems and methods as generally described and illustrated in the Figures herein could be arranged and designed in a wide variety of different implementations. Thus, the following more detailed description of several implementations, as represented in the Figures, is not intended to limit scope, as claimed, but is merely representative of the systems and methods.

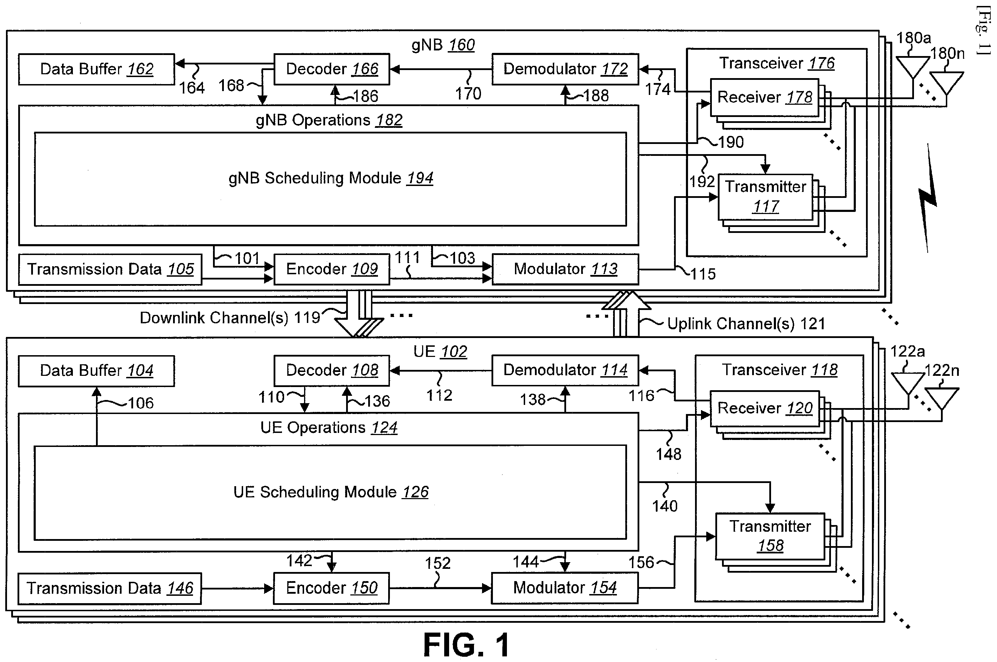

Figure 1 is a block diagram illustrating one implementation of one or more gNBs 160 and one or more UEs 102 in which systems and methods for multiplexing of HARQ-ACK with different priorities on PUCCH may be implemented. The one or more UEs 102 communicate with one or more gNBs 160 using one or more antennas 122a-n. For example, a UE 102 transmits electromagnetic signals to the gNB 160 and receives electromagnetic signals from the gNB 160 using the one or more antennas 122a-n. The gNB 160 communicates with the UE 102 using one or more antennas 180a-n.

The UE 102 and the gNB 160 may use one or more channels 119, 121 to communicate with each other. For example, a UE 102 may transmit information or data to the gNB 160 using one or more uplink channels 121. Examples of uplink channels 121 include a PUCCH (Physical Uplink Control Channel) and a PUSCH (Physical Uplink Shared Channel), PRACH (Physical Random Access Channel), etc. For example, uplink channels 121 (e.g., PUSCH) may be used for transmitting UL data (i.e., Transport Block(s), MAC PDU, and/or UL-SCH (Uplink-Shared Channel)).

In some examples, UL data may include URLLC data. The URLLC data may be UL-SCH data. Here, URLLC-PUSCH (i.e., a different Physical Uplink Shared Channel from PUSCH) may be defined for transmitting the URLLC data. For the sake of simple description, the term "PUSCH" may mean any of (1) only PUSCH (e.g., regular PUSCH, non-URLLC-PUSCH, etc.), (2) PUSCH or URLLC-PUSCH, (3) PUSCH and URLLC-PUSCH, or (4) only URLLC-PUSCH (e.g., not regular PUSCH).

Also, for example, uplink channels 121 may be used for transmitting Hybrid Automatic Repeat Request-ACK (HARQ-ACK), Channel State Information (CSI), and/or Scheduling Request (SR) signals. The HARQ-ACK may include information indicating a positive acknowledgment (ACK) or a negative acknowledgment (NACK) for DL data (i.e., Transport Block(s), Medium Access Control Protocol Data Unit (MAC PDU), and/or DL-SCH (Downlink-Shared Channel)).

The CSI may include information indicating a channel quality of downlink. The SR may be used for requesting UL-SCH (Uplink-Shared Channel) resources for new transmission and/or retransmission. For example, the SR may be used for requesting UL resources for transmitting UL data.

The one or more gNBs 160 may also transmit information or data to the one or more UEs 102 using one or more downlink channels 119, for instance. Examples of downlink channels 119 include a PDCCH, a PDSCH, etc. Other kinds of channels may be used. The PDCCH may be used for transmitting Downlink Control Information (DCI).

Each of the one or more UEs 102 may include one or more transceivers 118, one or more demodulators 114, one or more decoders 108, one or more encoders 150, one or more modulators 154, a data buffer 104, and a UE operations module 124. For example, one or more reception and/or transmission paths may be implemented in the UE 102. For convenience, only a single transceiver 118, decoder 108, demodulator 114, encoder 150, and modulator 154 are illustrated in the UE 102, though multiple parallel elements (e.g., transceivers 118, decoders 108, demodulators 114, encoders 150, and modulators 154) may be implemented.

The transceiver 118 may include one or more receivers 120 and one or more transmitters 158. The one or more receivers 120 may receive signals from the gNB 160 using one or more antennas 122a-n. For example, the receiver 120 may receive and downconvert signals to produce one or more received signals 116. The one or more received signals 116 may be provided to a demodulator 114. The one or more transmitters 158 may transmit signals to the gNB 160 using one or more antennas 122a-n. For example, the one or more transmitters 158 may upconvert and transmit one or more modulated signals 156.

The demodulator 114 may demodulate the one or more received signals 116 to produce one or more demodulated signals 112. The one or more demodulated signals 112 may be provided to the decoder 108. The UE 102 may use the decoder 108 to decode signals. The decoder 108 may produce decoded signals 110, which may include a UE-decoded signal 106 (also referred to as a first UE-decoded signal 106). For example, the first UE-decoded signal 106 may comprise received payload data, which may be stored in a data buffer 104. Another signal included in the decoded signals 110 (also referred to as a second UE-decoded signal 110) may comprise overhead data and/ or control data. For example, the second UE-decoded signal 110 may provide data that may be used by the UE operations module 124 to perform one or more operations.

In general, the UE operations module 124 may enable the UE 102 to communicate with the one or more gNBs 160. The UE operations module 124 may include a UE scheduling module 126. In some examples, the UE scheduling module 126 may be utilized to perform multiplexing of HARQ-ACK with different priorities on PUCCH as described herein.

Code rate determination for multiplexing of HARQ-ACK with different priorities on PUCCH with separate coding

5

is described herein. For example, details of separate coding methods for UCI multiplexing of HARQ-ACK with different priorities are described.

As enhancements of HARQ-ACK reporting with different priorities, multiplexing of UCI between different priorities can be supported by high layer signaling under some timing restrictions. For example, multiplexing of the same UCI type on a single PUCCH (e.g., URLLC HARQ-ACK and eMBB HARQ-ACK) may be supported.

A high priority UCI may be a high priority HARQ-ACK or a high priority SR. The priority of a SR can be indicated in a SR configuration by higher layer signaling. A high priority HARQ-ACK may correspond to a high priority PDSCH transmission. The priority of a scheduled PDSCH transmission may be determined by the priority indication in the scheduling DCI. The priority of an SPS PDSCH transmission may be configured by higher layer signaling. A high priority PUCCH resource should be used to report high priority HARQ-ACK with SR according to the invention, or without SR in examples not belonging of the claimed invention. A high priority PDSCH, HARQ-ACK or PUCCH resource may be configured to support URLLC services. In some examples, the high priority is configured with a priority index 1. A PUSCH or a PUCCH, including repetitions if any, can be of priority index 0 or of priority index 1. If a priority index is not provided for a PUSCH or a PUCCH, the priority index is 0.

A low priority UCI according to the invention is a low-priority HARQ-ACK, or in examples not belonging to the claimed invention may be a low priority SR, or a low priority CSI report, etc. A low priority HARQ-ACK may correspond to a low priority PDSCH transmission. The priority of a scheduled PDSCH transmission may be determined by the priority indication in the scheduling DCI. The priority of a SPS PDSCH transmission may be configured by higher layer signaling. A low priority PUCCH resource should be used to report low priority UCI. A low priority PDSCH, HARQ-ACK or PUCCH resource may be configured to support eMBB services. The low priority may be configured with a priority index 0.

If multiplexing of HARQ-ACK with different priorities on a PUCCH is supported, separate coding may be supported. In this case, the HARQ-ACK codebook of URLLC and eMBB may be coded and rate matched independently based on the maximum coding rate of the URLLC and eMBB PUCCH configuration. The coded bits may be rate matched separately and then concatenated together and transmitted on the selected PUCCH resource for URLLC.

Separate coding can be applied at least for the case that the number of HARQ-ACK bits for codebooks with different priorities is greater than 2 bits. With a separate coding method, HARQ-ACK codebooks with or without SR may be encoded separately based on different maximum code rate for each UCI priority. Thus, the UE may have two maximum code rates for HARQ-ACK with different priorities for multiplexing on a single PUCCH selected from high priority PUCCH resources configured for URLLC. For the high priority HARQ-ACK, the maximum code rate configured for the high priority PUCCH may be used. However, how to determine the maximum code rate of the low priority UCI on a high priority PUCCH resource may be further specified. Several methods are described herein.

In a first method (Method 1), an existing configuration in PUCCH-Configs may be used. In NR, two PUCCH-Configs can be configured on a UE. The PUCCH resources for eMBB HARQ-ACK can be configured with a PUCCH-Config with low priority or priority index 0, and the PUCCH resources for URLLC HARQ-ACK can be configured with a separate PUCCH-Config with high priority or priority index 1. The maximum code rate can be configured independently in each PUCCH-Config for PUCCH format 2, PUCCH format 3 and PUCCH format 4. Listing-1 illustrates an example for configuring the maximum code rate (maxCodeRate). Table-1 illustrates examples of the code rate (r) corresponding to the value of maxCodeRate.

```
PUCCH-FormatConfig ::=          SEQUENCE {
        interslotFrequencyHopping        ENUMERATED {enabled}
            OPTIONAL, -- Need R
        additionalDMRS                   ENUMERATED {true}
            OPTIONAL, -- Need R
        maxCodeRate                      PUCCH-MaxCodeRate
            OPTIONAL, -- Need R
        nrofSlots                        ENUMERATED {n2,n4,n8}
            OPTIONAL, -- Need S
        pi2BPSK                          ENUMERATED {enabled}
            OPTIONAL, -- Need R
        simultaneousHARQ-ACK-CSI         ENUMERATED {true}
            OPTIONAL  -- Need R
}


PUCCH-MaxCodeRate ::=           ENUMERATED {zeroDot08, zeroDot15,
zeroDot25, zeroDot35, zeroDot45, zeroDot60, zeroDot80}
```

Listing-1

Table-1

| maxCodeRate | Code rate $r$ |
|---|---|
| 0 | 0.08 |
| 1 | 0.15 |
| 2 | 0.25 |
| 3 | 0.35 |
| 4 | 0.45 |
| 5 | 0.60 |
| 6 | 0.80 |
| 7 | Reserved |

Therefore, in one method, in the case that two PUCCH-Configs are configured, the maximum code rate in PUCCH-Config with high priority may be used for URLLC HARQ-ACK, and the maximum code rate in the PUCCH-Config with low priority can be used for eMBB HARQ-ACK.

To provide higher reliability for high priority UCI, the high priority PUCCH carrying high priority URLLC HARQ-ACK may be lower than the maximum code rate for low priority PUCCH carrying low priority eMBB HARQ-ACK. This would be true if the high priority and low priority PUCCH are configured with the same transmit powers. Thus, if the same transmit power is configured for PUCCH resources configured for different priorities, the maximum code rate in each PUCCH-Config may be applied to the HARQ-ACK bits with the corresponding priority for multiplexing of HARQ-ACK with different priorities on a single PUCCH.

However, the transit power boosting is another method for URLLC PUCCH enhancement. The PUCCH reliability may be differentiated by configuring different power control parameters (e.g., a high priority PUCCH may be configured with higher transmit power than a low priority PUCCH). In this case, the maximum code rate configured for a low priority PUCCH may not be higher than the maximum code rate configured for a high priority PUCCH; or the maximum code rate difference between the high priority PUCCH and low priority PUCCH itself is not sufficient to satisfy the reliability requirements. If the maximum code rate of a low priority PUCCH is used directly for HARQ-ACK multiplexing of different priorities on a high priority PUCCH, the low priority HARQ-ACK would be given unnecessary protection with higher overhead on a high priority PUCCH resource.

With different PUCCH-Configs, separate PUCCH-PowerControl can be configured, and different p0-nominal parameters can be configured in the PUCCH-ConfigCommon for PUCCH with different priorities. The information element (IE) PUCCH-ConfigCommon may be used to configure the cell specific PUCCH parameters. Listing-2 illustrates an example of a PUCCH-ConfigCommon IE.

```
-- ASN1START
-- TAG-PUCCH-CONFIGCOMMON-START

PUCCH-ConfigCommon ::=          SEQUENCE {
    pucch-ResourceCommon            INTEGER (0..15)
        OPTIONAL,   -- Cond InitialBWP-Only
    pucch-GroupHopping              ENUMERATED { neither, enable,
        disable },
    hoppingId                       INTEGER (0..1023)
        OPTIONAL,   -- Need R
    p0-nominal                      INTEGER (-202..24)
        OPTIONAL,   -- Need R
    ...
}


-- TAG-PUCCH-CONFIGCOMMON-STOP
-- ASN1STOP
```

Listing-2

The IE PUCCH-PowerControl is used to configure UE-specific parameters for the power control of PUCCH. Listing-3 illustrates an example of a PUCCH-PowerControl IE.

```
-- ASN1START
-- TAG-PUCCH-POWERCONTROL-START
PUCCH-PowerControl ::=              SEQUENCE {
    deltaF-PUCCH-f0                     INTEGER (-16..15)
         OPTIONAL,  -- Need R
    deltaF-PUCCH-f1                     INTEGER (-16..15)
         OPTIONAL,  -- Need R
    deltaF-PUCCH-f2                     INTEGER (-16..15)
         OPTIONAL,  -- Need R
    deltaF-PUCCH-f3                     INTEGER (-16..15)
         OPTIONAL,  -- Need R
    deltaF-PUCCH-f4                     INTEGER (-16..15)
         OPTIONAL,  -- Need R
    p0-Set                         SEQUENCE (SIZE
       (1..maxNrofPUCCH-P0-PerSet)) OF P0-PUCCH
         OPTIONAL,  -- Need M
    pathlossReferenceRSs               SEQUENCE (SIZE
       (1..maxNrofPUCCH-PathlossReferenceRSs)) OF
       PUCCH-PathlossReferenceRS
         OPTIONAL,  -- Need M
    twoPUCCH-PC-AdjustmentStates        ENUMERATED {twoStates}
         OPTIONAL,  -- Need S
    ...
}


P0-PUCCH ::=                       SEQUENCE {
    p0-PUCCH-Id                        P0-PUCCH-Id,
    p0-PUCCH-Value                     INTEGER (-16..15)
}


P0-PUCCH-Id ::=                    INTEGER (1..8)


PUCCH-PathlossReferenceRS ::=      SEQUENCE {
    pucch-PathlossReferenceRS-Id   PUCCH-PathlossReferenceRS-Id,
    referenceSignal                CHOICE {
        ssb-Index                  SSB-Index,
        csi-RS-Index                   NZP-CSI-RS-ResourceId
```

```
        }
    }


    -- TAG-PUCCH-POWERCONTROL-STOP
    -- ASN1STOP
```

Listing-3

For a PUCCH transmission, the block of modulated symbols may be multiplied with the amplitude scaling factor $\beta_{PUCCH,s}$ in order to conform to the transmit power specified in Section 7.2.1 of TS 38.213. The PUCCH transmit power may be determined based on the maximum power, the *PO-nominal* parameter if configured, and other power control adjustments.

If a UE transmits a PUCCH on active UL BWP $b$ of carrier $f$ in the primary cell c using PUCCH power control adjustment state with index $l$, the UE determines the PUCCH transmission power $P_{PUCCH,b,f,c}(i,q_u,q_d,l)$ in PUCCH transmission occasion i as

$$P_{PUCCH,b,f,c}\left(i,q_u,q_d,l\right) = \min\left\{A,B\right\} \ [\text{dBm}],$$

where

$$A = P_{CMAX,f,c}\left(i\right),$$

and

$$B = P_{O\_PUCCH,b,f,c}\left(q_u\right) + 10\log_{10}\left(2^{\mu} \cdot M_{RB,b,f,c}^{PUCCH}\left(I\right)\right) +$$
$$PL_{b,f,c}\left(q_d\right) + \Delta_{F\_PUCCH}\left(F\right) + \Delta_{TF,b,f,c}\left(i\right) + g_{b,f,c}\left(i,l\right)$$

$P_{CMAX,f,c}(i)$ is the UE configured maximum output power for carrier $f$ of serving cell c in PUCCH transmission occasion $i$. $P_{O\_PUCCH,b,f,c}(q_u)$ is a parameter composed of the sum of a component $P_{O\_NOMINAL\_PUCCH}$, provided by *p0-nominal*, or $P_{O\_NOMINAL\_PUCCH} = 0$ dBm if *p0-nominal* is not provided, for carrier $f$ of primary cell c and, if provided, a component $P_{O\_UE\_PUCCH}(qu)$ provided by *p0-PUCCH-Value* in *P0-PUCCH* for active UL BWP $b$ of carrier $f$ of primary cell c, where $0 \leq q_u < Q_u$. $Q_u$ is a size for a set of $P_{O\_UE\_PUCCH}$ values provided by *maxNrofPUCCH-P0-PerSet*. The set of $P_{O\_UE\_PUCCH}$ values is provided by *p0-Set*. If *p0-Set* is not provided to the UE, $P_{O\_UE\_PUCCH}(q_u) = 0$.

Therefore, if different power control parameters are configured for different PUCCH-Configs, besides the maximum code rate configurations, the transmit power parameters for different PUCCH configurations may also be considered when multiplexing of UCI with different priorities are applied. At least, the PO-nominal parameters for different PUCCHs with different priorities may be used to estimate the different transmit power requirements for the corresponding PUCCHs.

If PO-nominal is the same for PUCCHs with different priorities, the maximum code rate in each PUCCH-Config can be applied HARQ-ACKs with the corresponding priority. That is, the maximum code rate in PUCCH-Config with high priority may be used for URLLC HARQ-ACK, and the maximum code rate in the PUCCH-Config with low priority may be used for eMBB HARQ-ACK.

If PO-nominal is different for the PUCCHs with different priorities, the PO-nominal for the high priority PUCCH may be configured with a higher power than that of a low priority PUCCH. The method to adjust the maximum code rate based on the transmit power difference can be further defined as discussed below.

For a PUCCH transmission, a 3 dB transmit power boost is equivalent to a repetition of the PUCCH transmission with the same transmit power, which can be approximately equivalent to apply an extra coding rate of r_extra = 1/2. In general, for a power boost of x dB between URLLC and eMBB PUCCH, an equivalent extra coding rate can be given as

$$x = 10 log_{10} \frac{1}{r\_extra},$$

and

$$r\_extra = \frac{1}{10^{\left(\frac{x}{10}\right)}}.$$

Thus, for the UCI with low priority transmitted on a PUCCH with high priority, if the transmit power of a PUCCH with high priority has a power boost of x dB over the transmit power of a PUCCH with low priority, to keep the same maximum code rate for UCI with low priority, the actual maximum code rate for the low priority UCI should be adjusted by dividing the r_extra coding rate as follows:

$$r\_adjusted = \frac{r}{r\_extra}.$$

Thus, if PO-nominal is different for PUCCHs with different priorities, for multiplexing of UCI with different priorities on a high priority PUCCH, the maximum code rate for low priority UCI should be adjusted based on the differences between PO-nominal values based on the above calculations.

The coding rate adjustment provides the low priority UCI with the same desired protection when reported on a high priority PUCCH with higher transmit power. However, the adjusted maximum code rate should not be higher than the currently supported *maxCodeRate* value of $r=0.8$. Thus, the determined *maxCodeRate* should be given as

$$r\_determined = \min(r\_adjusted, 0.8).$$

In one approach, the resulting r_determined can be any value below the maximum coding rate of 0.8. The encoded UCI rate matching can be performed accordingly based on the r_determined.

In another approach, to make sure a standard maximum code rate is used, the r_determined can be selected from the standard code rate values in the maxCodeRate table by choosing the closest code rate that is less than or equal to the calculated adjusted code rate r_adjusted.

The maximum code rate adjustment based on *P0_nominal* is a method that may not consider the actual PUCCH transmit power based on dynamic power controls. For example, due to power limitations and dynamic power controls for PUCCHs with different priorities, the PUCCH amplitude scaling factor can be dynamically changed. A more accurate maximum code rate adjustment may be performed based on the actual amplitude scaling factors $\beta_{\text{PUCCH},s}$ of the PUCCHs with different priorities.

In another method (Method 2), a beta offset value or coding rate ratio between the UCI of different priorities may be configured. Although Method 1 with maxCodeRate adjustment based on power control parameters can provide the desired protection for low priority UCI, the adjusted maximum code rate may be impacted by dynamic power control. This may result in dynamically changed maximum code rate for the low priority UCI.

To reduce complexity, a constant ratio can be used. Thus, in another method, a separate beta offset value or a code rate ratio can be configured. The beta offset or code rate ratio may be configured in a PUCCH-Config or PUCCH-ConfigCommon for PUCCHs with high priority PUCCH resources, as given in the examples of Listing-4.

```
PUCCH-FormatConfig ::=            SEQUENCE {
    interslotFrequencyHopping        ENUMERATED {enabled}
        OPTIONAL, -- Need R
    additionalDMRS                   ENUMERATED {true}
        OPTIONAL, -- Need R
    maxCodeRate                          PUCCH-MaxCodeRate
        OPTIONAL, -- Need R
    CodeRate_ratio                   ENUMERATED {v1,v2,v3,v4}
        OPTIONAL, -- Need R
    nrofSlots                            ENUMERATED {n2,n4,n8}
        OPTIONAL, -- Need S
    pi2BPSK                          ENUMERATED {enabled}
        OPTIONAL, -- Need R
    simultaneousHARQ-ACK-CSI         ENUMERATED {true}
        OPTIONAL  -- Need R
}


PUCCH-MaxCodeRate ::=                 ENUMERATED {zeroDot08,
    zeroDot15, zeroDot25, zeroDot35, zeroDot45, zeroDot60,
    zeroDot80}
```

Listing-4

The beta offset or code rate ratio may be separately configured by higher layer signaling (e.g., RRC signaling). The new parameter (e.g., a beta-offset) may specify the relative code rate ratio between UCI (e.g., HARQ-ACK) with different priorities. The beta offset or code ratio indicates relative protection between URLLC UCI over eMBB UCI.

In one approach, the beta offset is a value greater than or equal to 1 as the ratio between the maximum code rate of eMBB and URLLC. For example, $beta\_offset\_1 = r\_0/r\_1$, where $r\_0$ is the expected maximum code rate for low priority UCI with priority index 0, and $r\_1$ is the maximum code rate for high priority UCI with priority index 1. The $r\_1$ is determined by the maxCodeRate parameter in the PUCCH-Config for high priority PUCCH. With the configured beta_offset_1, the expected maximum code rate for low priority UCI is determined by $r\_0 = r\_1 * beta\_offet\_1$. The beta offset value may be selected from a pre-defined or configured set of values (e.g., a set of {1.5, 2, 3, 4}).

In another approach, the beta offset is a value less than or equal to 1 as the ratio between the maximum code rate of URLLC and eMBB. For example, $beta\_offset\_2 = r\_1/r\_0$, where $r\_0$ is the maximum code rate for low priority UCI with priority index 0, and $r\_1$ is the maximum code rate for high priority UCI with priority index 1. The $r\_1$ may be determined by the maxCodeRate parameter in the PUCCH-Config for high priority PUCCH. With the configured beta_offset_2, the expected maximum code rate for low priority UCI is determined by $r\_0 = r\_1 / beta\_offet\_2$. The beta offset value may be selected from a pre-defined or configured set of values (e.g., a set of {0.67, 0.5, 0.33, 0.25}).

The beta offset or code rate ratio may be configured for a UCI type to provide the relative redundancy (e.g., applying an extra code rate ratio for the UCI over PUSCH data). Also, different beta-offset values may be applied to different UCI types (e.g., a HARQ-ACK is configured with a higher beta-offset value than a CSI). Furthermore, for the multiplexing of UCI with different priorities, the beta-offset or code rate ratio may determine the relative protection of high priority UCI over the low priority UCI.

With this method, the maximum code rate configured for the low priority PUCCH is not used. Instead, the maximum code rate for low priority UCI multiplexing on a high priority PUCCH may be determined by the maximum code rate of the high priority PUCCH and the beta offset (or the code rate ratio). Again, the applied maximum code rate may not be higher than the currently supported *maxCodeRate* value of $r$=0.8. Thus, the determined *maxCodeRate* for the low priority UCI may be given as

$$r\_determined = \min\left(r\_0, 0.8\right).$$

In one approach, the resulting r_determined can be any value below the maximum coding rate of 0.8. The encoded UCI rate matching can be performed accordingly based on the r_determined.

In another approach, to make sure a standard maximum code rate is used, the r_determined can be selected from the standard code rate values in the maxCodeRate table by choosing the closest code rate that is less than or equal to the calculated code rate r_0.

In a third method (Method 3), the PUCCH-Config for URLLC can be configured with two maximum code rates. With both Method 1 and Method 2, the determined maximum code rate for low priority UCI may provide the desired protection for low priority UCI on a high priority PUCCH. However, with one approach, the adjusted or determined maximum code rate may not be a standard rate specified in the maxCodeRate table. With another approach, an extra step may be performed to select a standard code rate in the maxCodeRate table by choosing the closest code rate that is less than or equal to the calculated adjusted code rate.

To avoid the potential complexity and calculations, in another method, the PUCCH-Config for high priority PUCCH can be configured with two maximum code rates, one for high priority URLLC UCI, and one for low priority eMBB UCI when UCI multiplexing on a single PUCCH is applied.

For example, an extra configuration maxCodeRate_0 can be added to the PUCCH-FormatConfig for PUCCH-Config of high priority PUCCH resources. The maxCodeRate is used to determine the maximum code rate for high priority UCI on a high priority PUCCH. The maxCodeRate_0 is used to determine the maximum code rate for low priority UCI only when multiplexing of UCI with different priorities are applied on a high priority PUCCH. The maxCodeRate_0 should always be configured with a higher code rate than the maxCodeRate. The maximum code rate of each priority is then determined based on the maxCodeRate parameter based on the table above. An example of a PUCCH-FormatConfig IE with a maxCodeRate_0 is illustrated in Listing-5.

```
PUCCH-FormatConfig ::=              SEQUENCE {
    interslotFrequencyHopping           ENUMERATED {enabled}
        OPTIONAL, -- Need R
    additionalDMRS                  ENUMERATED {true}
        OPTIONAL, -- Need R
    maxCodeRate                     PUCCH-MaxCodeRate
        OPTIONAL, -- Need R
    maxCodeRate_0                       PUCCH-MaxCodeRate
        OPTIONAL, -- Need R
    nrofSlots                           ENUMERATED {n2,n4,n8}
        OPTIONAL, -- Need S
    pi2BPSK                             ENUMERATED {enabled}
        OPTIONAL, -- Need R
    simultaneousHARQ-ACK-CSI            ENUMERATED {true}
        OPTIONAL  -- Need R
}


PUCCH-MaxCodeRate ::=               ENUMERATED {zeroDot08,
        zeroDot15, zeroDot25, zeroDot35, zeroDot45, zeroDot60,
        zeroDot80}
```

Listing-5

In a fourth method (Method 4), an offset value for maxCodeRate index may be configured between the URLLC and eMBB. In this method, to reduce the complexity of code rate calculation and select a maximum code rate from the standard rates specified in the maxCodeRate table, an offset value for the maxCodeRate index may be configured between the UCI with different priorities. The maxCodeRate offset may be configured in a PUCCH-Config or PUCCH-ConfigCommon for PUCCHs with high priority PUCCH resources. In example of this approach is illustrated in Listing-6.

```
PUCCH-FormatConfig ::=              SEQUENCE {
    interslotFrequencyHopping          ENUMERATED {enabled}
        OPTIONAL, -- Need R
    additionalDMRS                  ENUMERATED {true}
        OPTIONAL, -- Need R
    maxCodeRate                     PUCCH-MaxCodeRate
        OPTIONAL, -- Need R
    maxCodeRate_Offset                 INTEGER (1..4),
        OPTIONAL, -- Need R
    nrofSlots                          ENUMERATED {n2,n4,n8}
        OPTIONAL, -- Need S
    pi2BPSK                            ENUMERATED {enabled}
        OPTIONAL, -- Need R
    simultaneousHARQ-ACK-CSI           ENUMERATED {true}
        OPTIONAL  -- Need R
}


PUCCH-MaxCodeRate ::=               ENUMERATED {zeroDot08,
        zeroDot15, zeroDot25, zeroDot35, zeroDot45, zeroDot60,
        zeroDot80}
```

Listing-6

The maxCodeRate offset (e.g., maxCodeRate_Offset) may be separately configured by higher layer signaling (e.g., RRC signaling). The maxCodeRate offset parameter may specify the relative distance between the maxCodeRate index of high priority UCI and low priority UCI. The maxCodeRate offset may be a positive integer (e.g., an integer within the set {1, 2, 3, 4}).

In the case of multiplexing of HARQ-ACK with different priorities on a high priority PUCCH resource, the maximum code rate of high priority UCI (e.g., HARQ-ACK with priority index 1), may be given by the maxCodeRate parameter. The maximum code rate of the low priority UCI (e.g., HARQ-ACK with priority index 0) may be the code rate value determined by an index value given by (maxCodeRate + maxCodeRate_Offset) in the code rate table. It should be noted that the maximum coding rate for the low priority UCI should not exceed the values defined in the code rate table. Thus, the valid maxCodeRate index should not be higher than 6 because index value 7 is reserved. Therefore, the resulting index value used for low priority HARQ-ACK is given by maxCodeRate index for low priority UCI = min((maxCodeRate + maxCodeRate_Offset), 6).

For example, if maxCodeRate is configured with 1 in the PUCCH configure for high priority HARQ-ACK, and an offset value is configured with a value of 2, when separate coding is used for multiplexing of HARQ-ACK with different priorities on a single PUCCH with high priority, the maximum code rate for HARQ-ACK with high priority is 0.15 given by the maxCodeRate index value of 1.

The maximum code rate for HARQ-ACK with low priority may be determined by the maxCodeRate index value of 1 added with the maxCodeRate_Offset value of 2, resulting a value of 3. Thus, the maximum code rate for HARQ-ACK with low priority is 0.35 based on the result maxCodeRate value of 3.

As a special case in this method, the maxCodeRate_Offset may be a fixed value (e.g., 1 or 2). The value can be fixed in the standard or configured by higher layer signaling.

In a fifth method (Method 5), a maxCodeRate for low priority UCI multiplexing on high priority PUCCH may be configured. In this method, a UE can be configured with a separate maxCodeRate (e.g., maxCodeRate_Mux) for low priority UCI when UCI multiplexing with different priorities on a single high priority PUCCH is applied. This parameter can be configured separately by higher layer signaling. The parameter is used only when multiplexing of UCI with different priorities is applied.

Therefore, for low priority HARQ-ACK, if it is reported on a low priority PUCCH resource, the maxCodeRate on the low priority PUCCH-Config is applied. When it is multiplexed with high priority UCI on a high priority PUCCH, the separately configured maxCodeRate_Mux is applied for the low priority UCI.

In a sixth method (Method 6), additional parameters may be configured. For example, the number of PRBs or the maximum payload size for UCIs of each priority and/or the maximum code rate of the low priority UCI may be determined based on the payload size and the available number of PRBs. The details of this method are described below. In this method, the code rate of the low priority UCI is not predetermined. The UE may first calculate the number of PRBs for the high priority UCI to determine the available number of PRBs for the low priority UCI. The code rate of the low priority UCI is then determined based on the payload size and the available number of PRBs.

PUCCH resource selection and multiplexing of HARQ-ACK with different priorities on PUCCH is also described herein. In current NR releases, UCI multiplexing on PUCCH is supported only for UCIs with the same priority. The PUCCH resource is selected based on the total UCI payload size, and a single maxCodeRate is applied for the UCI coding and rate matching on PUCCH. Thus, for HARQ-ACK codebook with high priority or a HARQ-ACK codebook with low priority, a UE can be configured up to four sets of PUCCH resources. A set of PUCCH resources is provided by PUCCH-ResourceSet and is associated with a Set of PUCCH resources index provided by pucch-ResourceSetId, with a set of PUCCH resource indexes provided by resourceList that provides a set of PUCCH-ResourceId used in the Set of PUCCH resources, and with a maximum number of UCI information bits the UE can transmit using a PUCCH resource in the set of PUCCH resources provided by maxPayloadSize. For the first Set of PUCCH resources, the maximum number of UCI information bits is 2. A maximum number of PUCCH resource indexes for a set of PUCCH resources is provided by maxNrofPUCCH-ResourcesPerSet. The maximum number of PUCCH resources in the first set of PUCCH resources is 32 and the maximum number of PUCCH resources in the other set of PUCCH resources is 8.

If the UE transmits $O_{UCI}$ UCI information bits, that include HARQ-ACK information bits, the UE may determine a set of PUCCH resources to be: a first set of PUCCH resources with *pucch-ResourceSetId* = 0 if $O_{UCI} \leq 2$ including 1 or 2 HARQ-ACK information bits and a positive or negative SR on one SR transmission occasion if transmission of HARQ-ACK information and SR occurs simultaneously; or a second set of PUCCH resources with *pucch-ResourceSetId* = 1, if provided by higher layers, if $2 < O_{UCI} \leq N_2$ where $N_2$ is equal to *maxPayloadSize if maxPayloadSize* is provided for the Set of PUCCH resources with *pucch-ResourceSetId* = 1; otherwise $N_2$ is equal to 1706; or a third set of PUCCH resources with *pucch-ResourceSetId* = 2, if provided by higher layers, if $N_2 < O_{UCI} \leq N_3$ where $N_3$ is equal to *maxPayloadSize* if *maxPayloadSize* is provided for the Set of PUCCH resources with *pucch-ResourceSetId* = 2; otherwise $N_3$ is equal to 1706; or a fourth set of PUCCH resources with *pucch-ResourceSetId = 3,* if provided by higher layers, if $N_3 < O_{UCI} \leq 1706$.

A UE may be configured by *maxCodeRate,* a code rate for multiplexing HARQ-ACK, SR, and CSI report(s) in a PUCCH transmission using PUCCH format 2, PUCCH format 3, or PUCCH format 4. $O_{ACK}$ is a total number of HARQ-ACK information bits, if present. $O_{SR}$ is a total number of SR bits. $O_{SR} = 0$ if there is no scheduling request bit; otherwise,

$$O_{SR} = \left\lceil \log_2 (K+1) \right\rceil$$ as described in Clause 9.2.5.1 of TS38.213. $O_{CRC}$ is a number of CRC bits, if any, for encoding HARQ-ACK, SR.

In the following, $r$ is a code rate given by *maxCodeRate* as in Table-1. $M_{RB}^{PUCCH}$ is a number of PRBs for PUCCH format 2, or PUCCH format 3, or PUCCH format 4, respectively, where $M_{RB}^{PUCCH}$ is provided by *nrofPRBs* in *PUCCH-format2* for PUCCH format 2 or by *nrofPRBs* in *PUCCH-format3* for PUCCH format 3, and $M_{RB}^{PUCCH} = 1$ for PUCCH format 4. $N_{sc,ctrl}^{RB} = N_{sc}^{RB} - 4$ for PUCCH format 2 or, if the PUCCH resource with PUCCH format 2 includes an orthogonal cover code with length $N_{SF}^{PUCCH,2}$ provided by *OCC-Length-r16*, $N_{sc,ctrl}^{RB} = \left( N_{sc}^{RB} - 4 \right) / N_{SF}^{PUCCH,2}$, $N_{sc,ctrl}^{RB} = N_{sc}^{RB}$ for PUCCH format 3 or, if the PUCCH resource with PUCCH format 3 includes an orthogonal cover code with length $N_{SF}^{PUCCH,3}$ provided by *OCC-Length-r16*, $N_{sc,ctrl}^{RB} = N_{sc}^{RB} / N_{SF}^{PUCCH,3}$, and

$$N_{sc,ctrl}^{RB} = N_{sc}^{RB} / N_{SF}^{PUCCH,4}$$ for PUCCH format 4, where $N_{sc}^{RB}$ is a number of subcarriers per resource block as in TS 38.211.

In some examples, $N_{symb-UCI}^{PUCCH}$ is equal to a number of PUCCH symbols $N_{symb}^{PUCCH,2}$ for PUCCH format 2 provided by *nrofSymbols* in *PUCCH-format2*. For PUCCH format 3 or for PUCCH format 4, $N_{symb-UCI}^{PUCCH}$ is equal to a number of PUCCH symbols $N_{symb}^{PUCCH,3}$ for PUCCH format 3 or equal to a number of PUCCH symbols $N_{symb}^{PUCCH,4}$ for PUCCH format 4 provided by *nrofSymbols* in *PUCCH-format3* or *nrofSymbols* in *PUCCH-format4,* respectively, after excluding a number of symbols used for DM-RS transmission for PUCCH format 3 or for PUCCH format 4, respectively as in TS 38.211.

In some examples, $Q_m$ = 1 if pi/2-BPSK is the modulation scheme and $Q_m$ = 2 if QPSK is the modulation scheme as indicated by *pi2BPSK* for PUCCH format 3 or PUCCH format 4. For PUCCH format 2, $Q_m$ = 2.

For a HARQ-ACK only PUCCH reporting on PUCCH format 2/3/4, the payload size is determined by $O_{ACK}$, as the number of bits for HARQ-ACK for transmission on the current PUCCH, where $O_{ACK}$ >2. If $O_{ACK}$ <= 11 bits, $O_{UCI}$ = $O_{ACK}$. If $O_{ACK}$ >11 bits, $O_{UCI}$ = $O_{ACK}$ + $O_{CRC}$, where $O_{CRC}$ is the number of CRC bits based on $O_{ACK}$.

If a UE transmits a PUCCH with $O_{ACK}$ HARQ-ACK information bits and $O_{CRC}$ bits using PUCCH format 2 or PUCCH format 3 in a PUCCH resource that includes $M_{RB}^{PUCCH}$ PRBs, the UE determines a number of PRBs $M_{RB,min}^{PUCCH}$ for the PUCCH transmission to be the minimum number of PRBs, that is smaller than or equal to a number of PRBs $M_{RB}^{PUCCH}$ provided respectively by *nrofPRBs* of *PUCCH-format2* or *nrofPRBs* of *PUCCH-format3* and start from the first PRB from the number of PRBs, that results to $\left(O_{ACK} + O_{CRC}\right) \leq M_{RB,min}^{PUCCH} \cdot N_{sc,ctrl}^{RB} \cdot N_{symb-UCI}^{PUCCH} \cdot Q_m \cdot r$ and, if $M_{RB}^{PUCCH} > 1$ , $\left(O_{ACK} + O_{CRC}\right) \leq \left(M_{RB,min}^{PUCCH} - 1\right) \cdot N_{sc,ctrl}^{RB} \cdot N_{symb-UCI}^{PUCCH} \cdot Q_m \cdot r$ , where $N_{sc,ctrl}^{RB}$, $N_{symb-UCI}^{PUCCH}$ , $Q_m$, and r are defined above. For PUCCH format 3, if $M_{RB,min}^{PUCCH}$ is not equal to $2^{\alpha_2} \cdot 3^{\alpha_3} \cdot 5^{\alpha_5}$ according to TS 38.211, $M_{RB,min}^{PUCCH}$ is increased to the nearest allowed value of *nrofPRBs* for *PUCCH-format3*. If $\left(O_{ACK} + O_{CRC}\right) > \left(M_{RB}^{PUCCH} - 1\right) \cdot N_{sc,ctrl}^{RB} \cdot N_{symb-UCI}^{PUCCH} \cdot Q_m \cdot r$ , the UE transmits the PUCCH over $M_{RB}^{PUCCH}$ PRBs.

If a UE is provided a first interlace of $M_{Interlace,0}^{PUCCH}$ PRBs by *interlace0* in *InterlaceAllocation-r16* and transmits a PUCCH with $O_{ACK}$ HARQ-ACK information bits and $O_{CRC}$ bits using PUCCH format 2 or PUCCH format 3, the UE transmits the PUCCH over the first interlace if $\left(O_{ACK} + O_{CRC}\right) \leq M_{Interlace,0}^{PUCCH} \cdot N_{sc,ctrl}^{RB} \cdot N_{symb-UCI}^{PUCCH} \cdot Q_m \cdot r$ ; otherwise, if the UE is provided a second interlace by *interlace1* in *PUCCH-format2* or *PUCCH-format3,* the UE transmits the PUCCH over the first and second interlaces.

For a HARQ-ACK with SR reporting on PUCCH format 2/3/4, $O_{SR}$ bits is appended to the $O_{ACK}$ bits. $O_{SR}$ is the number of bits for SR for transmission on the current PUCCH; $O_{SR}$ = 0 if there is no scheduling request bit; otherwise, $O_{SR} = \left\lceil \log_2\left(K+1\right) \right\rceil$ where K is the number of SR configurations of the same priority with SR transmissions overlap with the PUCCH resource for the HARQ-ACK. Thus, if ($O_{ACK}$ + $O_{SR}$) ≤ 11 bits, $O_{UCI}$ = $O_{ACK}$ + $O_{SR}$. If ($O_{ACK}$ + $O_{SR}$) > >11 bits, $O_{UCI}$ = $O_{ACK}$ + $O_{SR}$ + $O_{CRC}$, where $O_{CRC}$ is the number of CRC bits based on $O_{ACK}$ + $O_{SR}$.

If a UE would transmit a PUCCH with $O_{ACK}$ HARQ-ACK information bits in a resource using PUCCH format 2 or PUCCH format 3 or PUCCH format 4 in a slot, $\left\lceil \log_2\left(K+1\right) \right\rceil$ bits representing a negative or positive SR, in ascending order of the values of *schedulingRequestResourceId* and *schedulingRequestIDForBFR,* are appended to the HARQ-ACK information bits and the UE transmits the combined $O_{UCI} = O_{ACK} + \lceil \log_2(K+1) \rceil$ UCI bits in a PUCCH using a resource with PUCCH format 2 or PUCCH format 3 or PUCCH format 4 that the UE determines as described in Clauses 9.2.1 and 9.2.3 of TS 38.213. If one of the SRs is a positive LRR, the value of the $\lceil \log_2(K+1) \rceil$ bits indicates the positive LRR. An all-zero value for the $\lceil \log_2(K+1) \rceil$ bits represents a negative SR value across all K SRs.

If a UE transmits a PUCCH with $O_{ACK}$ HARQ-ACK information bits, $O_{SR} = \lceil \log_2(K+1) \rceil$ SR bits, and $O_{CRC}$ CRC bits using PUCCH format 2 or PUCCH format 3 in a PUCCH resource that includes $M_{RB}^{PUCCH}$ PRBs, the UE determines a number of PRBs $M_{RB,min}^{PUCCH}$ for the PUCCH transmission to be the minimum number of PRBs, that is smaller than or equal to a number of PRBs provided respectively by *nrofPRBs* in *PUCCH-format2* or *nrofPRBs* in *PUCCH-format3* and starts from the first PRB from the number of PRBs, that results to

$$\left( O_{ACK} + O_{SR} + O_{CRC} \right) \le M_{RB,min}^{PUCCH} \cdot N_{sc,ctrl}^{RB} \cdot N_{symb-UCI}^{PUCCH} \cdot Q_m \cdot r \quad \text{and, if} \quad M_{RB}^{PUCCH} > 1,$$

$$\left( O_{ACK} + O_{SR} + O_{CRC} \right) \le \left( M_{RB,min}^{PUCCH} - 1 \right) \cdot N_{sc,ctrl}^{RB} \cdot N_{symb-UCI}^{PUCCH} \cdot Q_m \cdot r, \quad \text{where} \quad N_{sc,ctrl}^{RB}, \quad N_{symb-UCI}^{PUCCH},$$

$Q_m$, and $r$ are defined above. For PUCCH format 3, if $M_{RB,min}^{PUCCH}$ is not equal to $2^{\alpha 2} \cdot 3^{\alpha 3} \cdot 5^{\alpha 5}$ according to TS 38.211, $M_{RB,min}^{PUCCH}$ is increased to the nearest allowed value of *nrofPRBs* for *PUCCH-format3*. If

$$\left( O_{ACK} + O_{SR} + O_{CRC} \right) \le \left( M_{RB,min}^{PUCCH} - 1 \right) \cdot N_{sc,ctrl}^{RB} \cdot N_{symb-UCI}^{PUCCH} \cdot Q_m \cdot r, \quad \text{the UE transmits the PUCCH over the}$$

$M_{RB}^{PUCCH}$ PRBs.

If a UE is provided a first interlace of $M_{Interlace,0}^{PUCCH}$ PRBs by *interlace0* in *InterlaceAllocation-r16* and transmits a PUCCH with $O_{ACK}$ HARQ-ACK information bits, $O_{SR} = \lceil \log_2(K+1) \rceil$ SR bits, and $O_{CRC}$ CRC bits using PUCCH format 2 or PUCCH format 3, the UE transmits the PUCCH over the first interlace if

$$\left( O_{ACK} + O_{SR} + O_{CRC} \right) \le M_{Interlace,0}^{PUCCH} \cdot N_{sc,ctrl}^{RB} \cdot N_{symb-UCI}^{PUCCH} \cdot Q_m \cdot r; \text{ otherwise, if the UE is provided a second}$$

interlace by *interlace1* in *PUCCH-format2* or *PUCCH-format3*, the UE transmits the PUCCH over the first and second interlaces.

Methods for separate coding and multiplexing of HARQ-ACK with different priorities are described herein. As described above, for a HARQ-ACK with or without SR reporting, the PUCCH is selected based on a maximum payload size configured for a set of PUCCH resources. A UE can be configured with up to 4 sets of PUCCH resources with different maximum payload sizes. Within each set, the maximum coding rate should satisfy the maximum payload configured for the given set of PUCCH resources. Also, the actual PUCCH transmission does not need to use all configured number of PRBs. The PUCCH transmission uses the minimum number of PRBs that can satisfy the maximum code rate for the reported UCI payload.

When multiplexing of HARQ-ACK with different priorities is supported, two different maximum code rates will be applied for the HARQ-ACK with or without SR with different priorities. To determine the PUCCH resource for the HARQ-ACK multiplexing, the payload calculation should be specified based on the payload size of the high priority HARQ-ACK and the payload size of the low priority HARQ-ACK. Since the low priority UCI is configured with a higher maximum code rate than that of high priority UCI, on the same high priority PUCCH resource, the total UCI payload can be higher than the configured maximum payload for high priority UCI only.

In a first method (Method 1), the PUCCH resource may be determined based on an estimated equivalent payload size. With two different maximum code rates, the equivalent UCI bits on a high priority PUCCH can be estimated as

$$O_{UCI\_estimate} = O_{UCI\_1} + \alpha \cdot O_{UCI\_0},$$

where $O_{UCI\_estimate}$ is the equivalent estimated UCI payload with UCI multiplexing of different priorities. $O_{UCI\_1}$ is the payload of high priority UCI (e.g.,. with priority index 1). For HARQ-ACK with or without SR multiplexing with different priorities, the UCI payload $O_{UCI\_1}$ may be determined as given above for the high priority HARQ-ACK codebook and high priority SR configurations. $O_{UCI\_0}$ is the payload of low priority UCI (e.g., with priority index 0). For HARQ-ACK with or without SR multiplexing with different priorities, the UCI payload $O_{UCI\_0}$ may be determined as given above for the low priority HARQ-ACK codebook and low priority SR configurations. In some examples, $\alpha$ is a scaling factor or a ratio between the maximum code rate of high priority UCI and the maximum code rate of the low priority UCI. That is:

$$\alpha = r_1 / r_0,$$

where $r_1$ is the maximum code rate determined by the *maxCodeRate* parameter for high priority UCI (e.g., UCI with priority index 1), and $r_0$ is the maximum code rate determined by the above-mentioned methods for low priority UCI (e.g., UCI with priority index 0).

The estimated UCI payload represents the different code rate applied on UCIs with different priorities. Since the high priority UCI has a lower maximum code rate than the low priority UCI, the ratio $\alpha$ is smaller than 1, and the estimated UCI payload is smaller than the sum of the payload of high priority UCI and the payload of low priority UCI.

The UE may then select the set of PUCCH resources based on $O_{UCI}$ given by the estimated UCI payload $O_{UCI\_estimate}$. The PUCCH resource may then be determined based on the ACK/NACK resource indicator (ARI) within the selected resource set. Once the PUCCH resource is determined, the multiplexing of HARQ-ACK with or without SR with different priorities may be performed with different maximum code rates on the selected PUCCH resource. First, the UE may determine a minimum number of PRBs $M_{RB,\min}^{PUCCH}$ for the UCI with the given priority (e.g., $M_{RB,\min\_1}^{PUCCH}$ and $M_{RB,\min\_0}^{PUCCH}$) for UCI with priority index 1 and priority index 0 respectively.

For the high priority HARQ-ACK with or without SR, $O_{ACK\_1}$ is a total number of HARQ-ACK information bits, if any. $O_{SR\_1}$ is a total number of SR bits. $O_{SR\_1} = 0$ if there is no scheduling request bit; otherwise, $O_{SR\_1} = \lceil log2(K_1+1) \rceil$ where $K_1$ is the number of SR configurations with high priority with SR transmissions overlap with the PUCCH resource for the HARQ-ACK.

For a PUCCH with $O_{ACK\_1}$ high priority HARQ-ACK information bits, $O_{SR\_1} = \lceil log2(K_1+1) \rceil$ high priority SR bits, and $O_{CRC\_1}$ CRC bits using PUCCH format 2 or PUCCH format 3 in a PUCCH resource that includes $M_{RB}^{PUCCH}$ PRBs, the UE determines a number of PRBs $M_{RB,\min\_1}^{PUCCH}$ to be the minimum number of PRBs, that is smaller than or equal to a number of PRBs provided respectively by *nrofPRBs* in *PUCCH-format2* or *nrofPRBs* in *PUCCH-format3,* that results to $\left(O_{ACK\_1}+O_{SR\_1}+O_{CRC\_1}\right) \leq M_{RB,\min\_1}^{PUCCH} \cdot N_{SC,ctrl}^{RB} \cdot N_{symb-UCI}^{PUCCH} \cdot Q_m \cdot r_1$ and, if $M_{RB}^{PUCCH} > 1$, $\left(O_{ACK\_1}+O_{SR\_1}+O_{CRC\_1}\right) > (M_{RB,\min\_1}^{PUCCH}-1) \cdot N_{SC,ctrl}^{RB} \cdot N_{symb-UCI}^{PUCCH} \cdot Q_m \cdot r_1$, where $N_{sc,ctrl}^{RB}$, $N_{symb-UCI}^{PUCCH}$, $Q_m$, and $r_1$ are defined above. For PUCCH format 3, if $M_{RB,\min\_1}^{PUCCH}$ is not equal to $2^{\alpha 2} \cdot 3^{\alpha 3} \cdot 5^{\alpha 5}$ according to TS 38.211, $M_{RB,\min\_1}^{PUCCH}$ is increased to the nearest allowed value of *nrofPRBs* for *PUCCH-format3*. If

$$\left(O_{ACK\_1}+O_{SR\_1}+O_{CRC\_1}\right) > (M_{RB}^{PUCCH}-1) \cdot N_{SC,ctrl}^{RB} \cdot N_{symb-UCI}^{PUCCH} \cdot Q_m \cdot r_1,$$

$$M_{RB,min\_1}^{PUCCH} = M_{RB}^{PUCCH}.$$

Similarly, for the low priority HARQ-ACK with or without SR, $O_{ACK\_0}$ is a total number of HARQ-ACK information bits, if any. $O_{SR\_0}$ is a total number of SR bits. $O_{SR\_0} = 0$ if there is no scheduling request bit; otherwise, $O_{SR\_1} = \lceil log2(K_0+1) \rceil$, where $K_0$ is the number of SR configurations with low priority with SR transmissions overlap with the PUCCH resource for the HARQ-ACK.

For a PUCCH to multiplex with $O_{ACK\_0}$ low priority HARQ-ACK information bits, $O_{SR\_0} = \lceil log2(K_0+1) \rceil$

high priority SR bits, and $O_{CRC\_0}$ CRC bits using PUCCH format 2 or PUCCH format 3 in a PUCCH resource that includes $M_{RB}^{PUCCH}$ PRBs, the UE determines a number of PRBs $M_{RB,min\_0}^{PUCCH}$ to be the minimum number of PRBs, that is smaller than or equal to a number of PRBs provided respectively by *nrofPRBs* in *PUCCH-format2* or *nrofPRBs* in *PUCCH-format3,* that results to $\left(O_{ACK\_0}+O_{SR\_0}+O_{CRC\_0}\right)\le M_{RB,min\_0}^{PUCCH}\cdot N_{SC,ctrl}^{RB}\cdot N_{symb-UCI}^{PUCCH}\cdot Q_m\cdot r_0$ and, if $M_{RB}^{PUCCH}>1$, $\left(O_{ACK\_0}+O_{SR\_0}+O_{CRC\_0}\right)>(M_{RB,min\_0}^{PUCCH}-1)\cdot N_{SC,ctrl}^{RB}\cdot N_{symb-UCI}^{PUCCH}\cdot Q_m\cdot r_0$, where $N_{sc,ctrl}^{RB}$, $N_{symb-UCI}^{PUCCH}$, $Q_m$, and $r_0$ are defined above. For PUCCH format 3, if $M_{RB,min\_0}^{PUCCH}$ is not equal to $2^{\alpha 2}\cdot 3^{\alpha 3}\cdot 5^{\alpha 5}$ according to TS 38.211, $M_{RB,min\_0}^{PUCCH}$ is increased to the nearest allowed value of *nrofPRBs* for *PUCCH-format3.* If $\left(O_{ACK\_0}+O_{SR\_0}+O_{CRC\_0}\right)>(M_{RB}^{PUCCH}-1)\cdot N_{SC,ctrl}^{RB}\cdot N_{symb-UCI}^{PUCCH}\cdot Q_m\cdot r_0$, $M_{RB,min\_0}^{PUCCH}=M_{RB}^{PUCCH}$.

If $M_{RB,min\_1}^{PUCCH}=M_{RB}^{PUCCH}$, the high priority HARQ-ACK with or without SR will occupy all PUCCH resources, the low priority HARQ-ACK with or without SR should be dropped. The high priority HARQ-ACK with or without SR may be reported on the PUCCH resource selected based on only the high priority UCI payload. This can be viewed as a fallback PUCCH reporting operation. Otherwise, if $M_{RB,min\_1}^{PUCCH}<M_{RB}^{PUCCH}$, the UE may determine if the total number of PRBs ( $M_{RB,min\_1}^{PUCCH}+M_{RB,min\_0}^{PUCCH}$ ) is less than or equal to the configured number of PRBs $M_{RB}^{PUCCH}$ for the PUCCH.

If $(M_{RB,min\_1}^{PUCCH}+M_{RB,min\_0}^{PUCCH})\le M_{RB}^{PUCCH}$, the PUCCH resource can carry all multiplexed UCI while satisfying the desired maximum code rate of UCI with different priorities. The UE may transmit the PUCCH over the ( $M_{RB,min\_1}^{PUCCH}+M_{RB,min\_0}^{PUCCH}$ ) PRBs. The high priority HARQ-ACK with or without SR is encoded and rate matched with an output on $M_{RB,min1}^{PUCCH}$ PRBs for the high priority UCI. The output is carried on the PUCCH PRBs that start from the first PRB from the number of PRBs of the PUCCH resource. The low priority HARQ-ACK with or without SR may be encoded and rate matched with an output on $M_{RB,min0}^{PUCCH}$ PRBs for the low priority UCI. The output may be multiplexed on the PRBs after the PRBs carrying high priority UCI (e.g., starts from the $(M_{RB,min1}^{PUCCH}+1)$ PRB from the number of PRBs of the PUCCH resource).

If the total number of PRBs ( $M_{RB,min\_1}^{PUCCH}+M_{RB,min\_0}^{PUCCH}$ ) is greater than the configured number of PRBs $M_{RB}^{PUCCH}$ for the PUCCH, e.g., $(M_{RB,min\_1}^{PUCCH}+M_{RB,min\_0}^{PUCCH})>M_{RB}^{PUCCH}$, the high priority UCI may be multiplexed in the $M_{RB,min\_1}^{PUCCH}$ PRBs. And the low priority UCI is multiplexed in the remaining ( $M_{RB}^{PUCCH}-M_{RB,min\_1}^{PUCCH}$ ) PRBs. The high priority HARQ-ACK with or without SR may be encoded and rate matched with an output on $M_{RB,min1}^{PUCCH}$ PRBs for the high priority UCI. The output is carried on the PUCCH PRBs that starts from the first PRB from the number of PRBs of the PUCCH resource. The low priority HARQ-ACK with or without SR may be encoded and rate matched with an output on the remaining ( $M_{RB}^{PUCCH}-M_{RB,min\_1}^{PUCCH}$ ) PRBs for the low priority UCI. The output may be multiplexed on the PRBs after the PRBs carrying high priority UCI, e.g., starts from the (

$M_{RB,min1}^{PUCCH} + 1$ ) PRB from the number of PRBs of the PUCCH resource.

Additionally or alternatively, the UE may check the actual code rate for the low priority UCI based on the payload size and the available PRBs. If the actual code rate is greater than the maximum code rate threshold, e.g. a maximum code rate of 0.8, the UE may drop the low priority UCI. The high priority HARQ-ACK with or without SR may be reported on the PUCCH resource selected based on only the high priority UCI payload.

In a second method (Method 2), re-selection of PUCCH resource may be allowed in the case of insufficient PRBs in a selected PUCCH. With method 1, an estimated UCI payload is used to determine a PUCCH resource for multiplexing of UCI with different priorities. The determined PUCCH is used to perform UCI multiplexing. The estimated payload is a good approximation, but may not always be accurate, especially since the UCI of each priority has to be mapped to fit at PRB level. For example, in the following two cases, the low priority UCI may be get the desired code rate.

In one case, if $M_{RB,min\_1}^{PUCCH} = M_{RB}^{PUCCH}$ , the low priority HARQ-ACK with or without SR will be dropped because there is no PRB left for the low priority UCI. In another case, for the low priority HARQ-ACK with or without SR is smaller than the desired number of PRBs $M_{RB,min\_0}^{PUCCH}$. Thus, the actual code rate for the low priority UCI may be higher than the expected maximum code rate.

To provide another example of multiplexing with the desired maximum code rate, the PUCCH resource may be reselected if the remaining number of PRBs ( $M_{RB}^{PUCCH} - M_{RB,min\_1}^{PUCCH}$ ) after high priority UCI multiplexing is smaller than the required number of PRBs $M_{RB,min\_0}^{PUCCH}$. The UE may choose a PUCCH in the next set of PUCCH resources with higher maximum payload size if it is available.

The PUCCH resource in the next set of PUCCH resources, if available, can be determined the same way based on the PUCCH resource indication, e.g. ARI.

Once the PUCCH resource is selected from the next set of PUCCH resources, if available, the same procedure as in Method 1 can be performed again to determine a new set of the minimum number of PRBs $M_{RB,min\_1}^{PUCCH}$ and $M_{RB,min\_0}^{PUCCH}$ for UCI with priority index 1 and priority index 0 respectively based on the new PUCCH resource configuration. Then, the conditions can be checked again. If $(M_{RB,min\_1}^{PUCCH} + M_{RB,min\_0}^{PUCCH}) \le M_{RB}^{PUCCH}$ , the selected PUCCH resource can carry all multiplexed UCI while satisfying the desired maximum code rate of UCI with different priorities. Otherwise, if $(M_{RB,min\_1}^{PUCCH} + M_{RB,min\_0}^{PUCCH}) > M_{RB}^{PUCCH}$ , the process may be repeated to select a PUCCH resource in the next Set of PUCCH resources with higher maximum payload size.

If the selected PUCCH resource is from the last set of PUCCH resources with the maximum payload size, and if the total number of PRBs ( $M_{RB,min\_1}^{PUCCH} + M_{RB,min\_0}^{PUCCH}$ ) is greater than the configured number of PRBs $M_{RB}^{PUCCH}$ for the PUCCH, i.e. $(M_{RB,min\_1}^{PUCCH} + M_{RB,min\_0}^{PUCCH}) > M_{RB}^{PUCCH}$ , the high priority UCI may be multiplexed in the $M_{RB,min\_1}^{PUCCH}$ PRBs. And the low priority UCI may be multiplexing in the remaining ( $M_{RB}^{PUCCH} - M_{RB,min\_1}^{PUCCH}$ ) PRBs.

The high priority HARQ-ACK with or without SR is encoded and rate matched with an output on $M_{RB,min1}^{PUCCH}$ PRBs for the high priority UCI. The output may be carried on the PUCCH PRBs that starts from the first PRB from the number of PRBs of the PUCCH resource. The low priority HARQ-ACK with or without SR may be encoded and rate matched with an output on the remaining ( $M_{RB}^{PUCCH} - M_{RB,min\_1}^{PUCCH}$ ) PRBs for the low priority UCI. The output may be multiplexed on the PRBs after the PRBs carrying high priority UCI, i.e. starts from the ( $M_{RB,min1}^{PUCCH} + 1$ ) PRB from the number of PRBs of the PUCCH resource.

Additionally or alternatively, the UE may check the actual code rate for the low priority UCI based on the payload size and the available PRBs. If the actual code rate is greater than the maximum code rate threshold, e.g. a maximum code rate of 0.8, the UE may drop the low priority UCI. The high priority HARQ-ACK with or without SR may be reported on the PUCCH resource selected based on only the high priority UCI payload.

Since a UE can be configured up to 4 set of PUCCH resources, with the first set of PUCCH resources supports up to 2 bits only. The maximum tests for the PUCCH resource determination and selection is 3 when all 4 sets of PUCCH resources are configured. With the estimated payload in method 1, the actual number of PUCCH resource selection may be even smaller.

In a third method (Method 3), re-selection of PUCCH resource without an estimated payload may be allowed. Since the maximum tests for the PUCCH resource determination and selection is 3 even if all 4 sets of PUCCH resources are configured, the UE may not need to perform the equivalent payload estimation as in Method 1 and Method 2.

Thus, in another method, the UE may determine a PUCCH resource based on the payload size of the high priority HARQ-ACK with or without SR. Once the PUCCH resource is selected, the same procedure as in Method 1 can be performed to determine a set of the minimum number of PRBs $M_{RB,\min\_1}^{PUCCH}$ $and$ $M_{RB,\min\_0}^{PUCCH}$ for UCI with priority index 1 and priority index 0 respectively based on the new PUCCH resource configuration. Then, the conditions can be checked again. If $(M_{RB,\min\_1}^{PUCCH} + M_{RB,\min\_0}^{PUCCH}) \leq M_{RB}^{PUCCH}$, the selected PUCCH resource can carry all multiplexed UCI while satisfying the desired maximum code rate of UCI with different priorities. Otherwise, if $(M_{RB,\min\_1}^{PUCCH} + M_{RB,\min\_0}^{PUCCH}) > M_{RB}^{PUCCH}$, the UE may choose a PUCCH in the next set of PUCCH resources with higher maximum payload size if it is available. The same process described in Method 2 can be used to choose the PUCCH resource for the multiplexing of HARQ-ACK with or without SR with different priorities.

If the selected PUCCH resource is from the last set of PUCCH resources with the maximum payload size, and if the total number of PRBs ($M_{RB,\min\_1}^{PUCCH} + M_{RB,\min\_0}^{PUCCH}$) is greater than the configured number of PRBs $M_{RB}^{PUCCH}$ for the PUCCH, i.e. $(M_{RB,\min\_1}^{PUCCH} + M_{RB,\min\_0}^{PUCCH}) > M_{RB}^{PUCCH}$, the high priority UCI is multiplexed in the $M_{RB,\min\_1}^{PUCCH}$ PRBs. And the low priority UCI is multiplexing in the remaining ($M_{RB}^{PUCCH} - M_{RB,\min\_1}^{PUCCH}$) PRBs. The high priority HARQ-ACK with or without SR is encoded and rate matched with an output on $M_{RB,\min 1}^{PUCCH}$ PRBs for the high priority UCI. The output is carried on the PUCCH PRBs that starts from the first PRB from the number of PRBs of the PUCCH resource. The low priority HARQ-ACK with or without SR is encoded and rate matched with an output on the remaining ($M_{RB}^{PUCCH} - M_{RB,\min\_1}^{PUCCH}$) PRBs for the low priority UCI. The output is multiplexed on the PRBs after the PRBs carrying high priority UCI, i.e. starts from the ($M_{RB,\min 1}^{PUCCH} + 1$) PRB of the PUCCH resource.

Additionally or alternatively, the UE may check the actual code rate for the low priority UCI based on the payload size and the available PRBs. If the actual code rate is greater than the maximum code rate threshold, e.g. a maximum code rate of 0.8, the UE may drop the low priority UCI. The high priority HARQ-ACK with or without SR may be reported on the PUCCH resource selected based on only the high priority UCI payload.

Alternative approaches with additional parameters are also described herein. In the case of multiplexing of HRQ-ACK with different priorities, additional parameters can be configured. The additional parameters can be used to select a PUCCH resource for UCI reporting, and determine whether the HARQ-ACK with different priorities can be multiplexed on the selected PUCCH resource. If multiplexing on a single PUCCH is supported, the additional parameters can then be used to determine the number of PRBs to be used for the HARQ-ACK with each priority. The code rate of the low priority UCI may then be determined based on the low priority UCI payload size and the available PRB resources for the multiplexing.

In a first method (Method 1), a number of PRBs that can be used for UCIs of each priority in a PUCCH resource may be configured. A PUCCH format 2 or PUCCH format 3 all have parameters of *nrofPRBs* and *nrofSymbols* in the PUCCH resource configuration. In the case of multiplexing of UCI with different priorities, besides the configured *nrofPRBs* $M_{RB}^{PUCCH}$, the number of PRBs can be used for UCIs with each priority index can be further configured.

In the case that the number of PRBs are configured for UCIs of each priority, the maximum code rate of the low priority UCI may be determined based on the payload size and the available number of PRBs. The UE may determine a PUCCH resource based on the payload of the high priority UCI. The UE may determine a PUCCH resource based on the payload of the high priority UCI and the payload of the low priority UCI.

The maximum number of PRBs $M_{RB\_1}^{PUCCH}$ for the high priority UCI, i.e. with priority index 1, can be less than or equal to the configured *nrofPRBs* $M_{RB}^{PUCCH}$ of the PUCCH resource.

The maximum number of PRBs $M_{RB\_0}^{PUCCH}$ for the low priority UCI, i.e. with priority index 0, may be less than or equal to the configured nrofPRBs $M_{RB}^{PUCCH}$ of the PUCCH resource.

In one approach, the sum of the maximum number of PRBs for different priorities can be the same as the configured number of PRBs of the PUCCH resource, $M_{RB\_1}^{PUCCH} + M_{RB\_0}^{PUCCH} = M_{RB}^{PUCCH}$. In this case, the maximum payload size of the high priority UCI on this PUCCH may be reduced with the given *maxCodeRate*; or the actual code rate of the rate match output may be increased to fit in the configured number of PRBs for the high priority UCI. By configuring the number of PRBs can be used for a low priority UCI, the maximum code rate for the low priority UCI can be determined based on the payload size and the available number of RE resources on these PRBs.

In another approach, the sum of the maximum number of PRBs for different priorities can be greater than the configured number of PRBs of the PUCCH resource, $M_{RB\_1}^{PUCCH} + M_{RB\_0}^{PUCCH} > M_{RB}^{PUCCH}$.

In both cases, the actual minimum number of PRBs $M_{RB\_min\_1}^{PUCCH}$ for the high priority UCI may be determined first based on the high priority UCI payload size and the *maxCodeRate* of the high priority PUCCH.

For a PUCCH with $O_{ACK\_1}$ high priority HARQ-ACK information bits, $O_{SR\_1} = \lceil log_2(K_1+1) \rceil$ high priority SR bits, and $O_{CRC\_1}$ CRC bits using PUCCH format 2 or PUCCH format 3 in a PUCCH resource that includes $M_{RB}^{PUCCH}$ PRBs, the UE determines a number of PRBs $M_{RB,min\_1}^{PUCCH}$ to be the minimum number of PRBs, that is less than or equal to a number of PRBs provided respectively by *nrofPRBs* in *PUCCH-format2* or *nrofPRBs* in *PUCCH-format3,* that results to $\left(O_{ACK\_1}+O_{SR\_1}+O_{CRC\_1}\right) \leq M_{RB,min\_1}^{PUCCH} \cdot N_{SC,ctrl}^{RB} \cdot N_{symb-UCI}^{PUCCH} \cdot Q_m \cdot r$ and, if $M_{RB}^{PUCCH} > 1$,

$$\left(O_{ACK\_1}+O_{SR\_1}+O_{CRC\_1}\right) > (M_{RB,min\_1}^{PUCCH}-1) \cdot N_{SC,ctrl}^{RB} \cdot N_{symb-UCI}^{PUCCH} \cdot Q_m \cdot r \quad , \quad \text{where}$$

$N_{sc,ctrl}^{RB}$, $N_{symb-UCI}^{PUCCH}$, $O_m$, and r are defined above. For PUCCH format 3, if $M_{RB,min\_1}^{PUCCH}$ is not equal to $2^{\alpha 2} \cdot 3^{\alpha 3} \cdot 5^{\alpha 5}$ according to TS 38.211, $M_{RB,min\_1}^{PUCCH}$ is increased to the nearest allowed value of *nrofPRBs* for *PUCCH-format3.*

If the minimum number of PRBs for the high priority UCI is smaller than the configured number of PRBs for the high priority UCI, i.e. $M_{RB,min\_1}^{PUCCH} \leq M_{RB\_1}^{PUCCH}$, $M_{RB,min\_1}^{PUCCH}$ PRBs are used for the high priority HARQ-ACK with or without SR.

If the minimum number of PRBs for the high priority UCI is greater than the configured number of PRBs for the high priority UCI, i.e. $M_{RB,min\_1}^{PUCCH} > M_{RB\_1}^{PUCCH}$, in one approach, $M_{RB\_1}^{PUCCH}$ PRBs are used for the high priority HARQ-ACK with or without SR, i.e. $M_{RB,min\_1}^{PUCCH} = M_{RB\_1}^{PUCCH}$.

The extra number of PRB parameter can be used to determine whether multiplexing of UCI with different priorities can be applied on the given PUCCH resource. The UE should calculate whether the reserved number of PRBs for high priority UCI is enough to carry the high priority UCI based on the high priority payload and maxCodeRate configured for the high priority PUCCH. If the reserved number of PRBs is not sufficient to carry the high priority UCI, UCI multiplexing should not be used, the low priority UCI should be dropped, and only the high priority UCI is reported on a high priority PUCCH. The high priority HARQ-ACK with or without SR may be reported on the PUCCH resource selected based on only the high priority UCI payload.

Thus, alternatively, in another approach, if the minimum number of PRBs for the high priority UCI is greater than the configured number of PRBs for the high priority UCI, i.e. $M_{RB,min\_1}^{PUCCH} > M_{RB\_1}^{PUCCH}$, the low priority UCI is dropped, and only the high priority UCI is reported on a high priority PUCCH. The high priority HARQ-ACK with or without SR may be reported on the PUCCH resource selected based on only the high priority UCI payload. Thus, only high priority HARQ-ACK with or without SR is reported on $M_{RB,min\_1}^{PUCCH}$ PRBs of the PUCCH resource. If

$$\left(O_{ACK\_1} + O_{SR\_1} + O_{CRC\_1}\right) > (M_{RB\_1}^{PUCCH} - 1) \cdot N_{SC,ctrl}^{RB} \cdot N_{symb-UCI}^{PUCCH} \cdot Q_m \cdot r ,$$

$$M_{RB,min\_1}^{PUCCH} = M_{RB}^{PUCCH} .$$

If multiplexing of UCI with different priorities can be applied, the $M_{RB\_min\_1}^{PUCCH}$ should be smaller or equal to $M_{RB\_1}^{PUCCH}$. Thus, the PRBs can be used for the low priority UCI is given by $\min(M_{RB\_0}^{PUCCH}, M_{RB}^{PUCCH} - M_{RB\_min\_1}^{PUCCH})$. With the number of PRBs that can be used for a low priority UCI, the maximum code rate for the low priority UCI can be determined based on the payload size and the available number of RE resources on these PRBs.

The high priority HARQ-ACK with or without SR is encoded and rate matched with an output on $M_{RB,min1}^{PUCCH}$ PRBs for the high priority UCI. The output is carried on the PUCCH PRBs that starts from the first PRB from the number of PRBs of the PUCCH resource. The low priority HARQ-ACK with or without SR is encoded and rate matched with an output on the remaining $\min(M_{RB\_0}^{PUCCH}, M_{RB}^{PUCCH} - M_{RB\_min\_1}^{PUCCH})$ PRBs for the low priority UCI. The output is multiplexed on the PRBs after the PRBs carrying high priority UCI, i.e. starts from the ($M_{RB.min1}^{PUCCH} + 1$) PRB from the number of PRBs of the PUCCH resource.

If the reserved number of PRBs is sufficient to carry the high priority UCI, UCI multiplexing may be applied. The UE may further determine the actual code rate of the low priority UCI with the given UCI payload and available number of PRBs. If the actual code rate is greater than the maximum code rate threshold, e.g. a maximum code rate of 0.8, the UE may drop the low priority UCI. The high priority HARQ-ACK with or without SR may be reported on the PUCCH resource selected based on only the high priority UCI payload.

Additionally, or alternatively, the UE may perform PUCCH reselection by choosing a PUCCH in the next set of PUCCH resources with higher maximum payload size if it is available, then repeat the same procedure as described above.

In a second method (Method 2), the payload sizes for UCIs of each priority may be configured. In this approach, additional parameters are not configured for each PUCCH resource. Instead, additional parameters are configured for the maximum payload sizes of each resource set. Thus, in case of multiplexing of UCI with different priorities, besides the maximum payload for each set of PUCCH resources, the payload sizes of UCIs with each priority index can be further configured for each set of PUCCH resources.

The maximum payload for the high priority UCI, i.e. with priority index 1, can be less than or equal to the configured maximum payload of the PUCCH resource. The maximum payload for the low priority UCI, i.e. with priority index 0, can be less than or equal to the configured maximum payload of the PUCCH resource. The maximum payload for the low priority UCI may be greater than the configured maximum payload of the PUCCH resource because a higher code rate may be applied for the low priority UCI than the high priority UCI.

In the case that the maximum payload sizes are configured for UCIs of each priority, the maximum code rate of the low priority UCI is also determined based on the payload size and the available number of PRBs. In this case, the PUCCH resource may be selected based the maximum payload size for a high priority UCI instead of the original maximum payload size. For the selected PUCCH resource, multiplexing of HARQ-ACK with different priorities may not be supported if the payload of the low priority HARQ-ACK is higher than the configured maximum payload of low priority UCI.

For UCI multiplexing with different priorities on a PUCCH resource configured with *nrofPRBs* $M_{RB}^{PUCCH}$, the actual minimum number of PRBs $M_{RB\_min}^{PUCCH}\_1$ for the high priority UCI is determined first based on the high priority UCI payload size and the *maxCodeRate* of the high priority PUCCH.

For a PUCCH with $O_{ACK\_1}$ high priority HARQ-ACK information bits, $O_{SR\_1} = \lceil log_2(K_1+1) \rceil$ high priority SR bits, and $O_{CRC\_1}$ CRC bits using PUCCH format 2 or PUCCH format 3 in a PUCCH resource that includes $M_{RB}^{PUCCH}$ PRBs, the UE determines a number of PRBs $M_{RB,min}^{PUCCH}\_1$ to be the minimum number of PRBs, that is smaller than or equal to a number of PRBs provided respectively by *nrofPRBs* in *PUCCH-format2* or *nrofPRBs* in *PUCCH-format3,* that results to $\left(O_{ACK\_1} + O_{SR\_1} + O_{CRC\_1}\right) \le M_{RB,min\_1}^{PUCCH} \cdot N_{SC,ctrl}^{RB} \cdot N_{symb-UCI}^{PUCCH} \cdot Q_m \cdot r_1$ and, if $M_{RB}^{PUCCH} > 1$, $\left(O_{ACK\_1} + O_{SR\_1} + O_{CRC\_1}\right) > (M_{RB,min\_1}^{PUCCH} - 1) \cdot N_{SC,ctrl}^{RB} \cdot N_{symb-UCI}^{PUCCH} \cdot Q_m \cdot r_1$, where $N_{sc,ctrl}^{RB}$, $N_{symb-UCI}^{PUCCH}$, $Q_m$, and $r_1$ are defined above. For PUCCH format 3, if $M_{RB,min}^{PUCCH}\_1$ is not equal to $2^{\alpha 2} \cdot 3^{\alpha 3} \cdot 5^{\alpha 5}$ according to [4,TS 38.211], $M_{RB,min}^{PUCCH}\_1$ is increased to the nearest allowed value of *nrofPRBs* for *PUCCH-format3*. If $\left(O_{ACK\_1} + O_{SR\_1} + O_{CRC\_1}\right) > (M_{RB}^{PUCCH} - 1) \cdot N_{SC,ctrl}^{RB} \cdot N_{symb-UCI}^{PUCCH} \cdot Q_m \cdot r_1$, $M_{RB,min}^{PUCCH}\_1 = M_{RB}^{PUCCH}$.

The remaining PRBs may be used for the low priority UCI. Thus, the PRBs can be used for the low priority UCI is given by $M_{RB}^{PUCCH} - M_{RB\_min}^{PUCCH}\_1$.

With the number of PRBs can be used for a low priority UCI, the maximum code rate for the low priority UCI can be determined based on the payload size and the available number of RE resources on these PRBs. If the UE determines that the remaining PRBs can carry the low priority UCI with the configured maximum code rate of the PUCCH, the maximum code rate configured for the PUCCH is used for low priority UCI multiplexing.

For a PUCCH to multiplex with $O_{ACK\_0}$ low priority HARQ-ACK information bits, $O_{SR\_0} = \lceil log_2(K_0+1) \rceil$ high priority SR bits, and $O_{CRC\_0}$ CRC bits using PUCCH format 2 or PUCCH format 3 in a PUCCH resource that includes $M_{RB}^{PUCCH}$ PRBs, the UE determines a number of PRBs $M_{RB,min}^{PUCCH}\_0$ to be the minimum number of PRBs, that is less than or equal to a number of PRBs provided respectively by *nrofPRBs* in *PUCCH-format2* or *nrofPRBs* in *PUCCH-format3,* that results to $\left(O_{ACK\_0} + O_{SR\_0} + O_{CRC\_0}\right) \le M_{RB,min\_0}^{PUCCH} \cdot N_{SC,ctrl}^{RB} \cdot N_{symb-UCI}^{PUCCH} \cdot Q_m \cdot r$ and, if $M_{RB}^{PUCCH} > 1$, $\left(O_{ACK\_0} + O_{SR\_0} + O_{CRC\_0}\right) > (M_{RB,min\_0}^{PUCCH} - 1) \cdot N_{SC,ctrl}^{RB} \cdot N_{symb-UCI}^{PUCCH} \cdot Q_m \cdot r$, where $N_{sc,ctrl}^{RB}$, $N_{symb-UCI}^{PUCCH}$, $Q_m$, and $r$ are defined above. For PUCCH format 3, if $M_{RB,min}^{PUCCH}\_0$ is not equal to $2^{\alpha 2} \cdot 3^{\alpha 3} \cdot 5^{\alpha 5}$ according to [4,TS 38.211], $M_{RB,min}^{PUCCH}\_0$ is increased to the nearest allowed value of *nrofPRBs* for *PUCCH-format3*. If $\left(O_{ACK\_0} + O_{SR\_0} + O_{CRC\_0}\right) > (M_{RB}^{PUCCH} - 1) \cdot N_{SC,ctrl}^{RB} \cdot N_{symb-UCI}^{PUCCH} \cdot Q_m \cdot r$, $M_{RB,min}^{PUCCH}\_0 = M_{RB}^{PUCCH}$.

If $M_{RB,min}^{PUCCH}\_0 \le (M_{RB}^{PUCCH} - M_{RB\_min}^{PUCCH}\_1)$, the low priority UCI may be multiplexed on $M_{RB,min}^{PUCCH}\_0$ PRBs. Thus, the high priority HARQ-ACK with or without SR is encoded and rate matched with an output on $M_{RB,min1}^{PUCCH}$ PRBs for the high priority UCI. The output is carried on the PUCCH PRBs that starts from the first PRB from the number of PRBs of the PUCCH resource. The low priority HARQ-ACK with or without SR is encoded and rate matched with an output on $M_{RB,\min 0}^{PUCCH}$ PRBs for the low priority UCI. The output may be multiplexed on the PRBs after the PRBs carrying high priority UCI, i.e. starts from the ( $M_{RB,\min 1}^{PUCCH}+1$ ) PRB from the number of PRBs of the PUCCH resource.

If the UE determines that the remaining PRBs cannot carry the low priority UCI with the configured maximum code rate of the PUCCH, the actual code rate for low priority UCI is then calculated based on the payload size and the available number of RE resources on the remaining PRBs.

The high priority HARQ-ACK with or without SR may be encoded and rate matched with an output on $M_{RB,\min\_1}^{PUCCH}$ PRBs for the high priority UCI. The output may be carried on the PUCCH PRBs that starts from the first PRB from the number of PRBs of the PUCCH resource. The low priority HARQ-ACK with or without SR may be encoded and rate matched with an output on the remaining $M_{RB}^{PUCCH}-M_{RB\_min\_1}^{PUCCH}$ PRBs for the low priority UCI. The output may be multiplexed on the PRBs after the PRBs carrying high priority UCI, i.e. starts from the ( $M_{RB,\min 1}^{PUCCH}+1$ ) PRB from the number of PRBs of the PUCCH resource.

Additionally, if the actual code rate is greater than the maximum code rate threshold, e.g. a maximum code rate of 0.8, the UE may drop the low priority UCI. The high priority HARQ-ACK with or without SR may be reported on the PUCCH resource selected based on only the high priority UCI payload.

Additionally, or alternatively, the UE may perform PUCCH reselection by choosing a PUCCH in the next set of PUCCH resources with higher maximum payload size if it is available, then repeat the same procedure as described above.

In one approach, only one parameter is configured, the maximum number of PRBs for UCI with each priority index in each PUCCH resource or the maximum number of payloads for UCI with each priority index for each set of PUCCH resources.

In another approach, the maximum number of PRBs for UCI with each priority index in each PUCCH resource and the maximum number of payloads for UCI with each priority index for each set of PUCCH resources may be configured independently and/ or jointly.

In the above descriptions, with additional parameters, a maximum code rate of low priority UCI is not separately configured on a PUCCH resource with high priority. The actual code rate for the low priority HARQ-ACK with or without SR is determined based on the available remaining PRBs for the low priority UCI and the payload size of the low priority HARQ-ACK with or without SR.

The additional parameters may be configured indirectly from a separate configuration for maximum code rate of low priority UCI. That is, a maximum code rate for the low priority UCI multiplexed on a high priority PUCCH can still be configured. In this case, if the actual code rate is greater than the configured maximum code rate for low priority UCI, the UE may drop the low priority UCI. The high priority HARQ-ACK with or without SR may be reported on the PUCCH resource selected based on only the high priority UCI payload.

The UE operations module 124 may provide information 148 to the one or more receivers 120. For example, the UE operations module 124 may inform the receiver(s) 120 when to receive retransmissions.

The UE operations module 124 may provide information 138 to the demodulator 114. For example, the UE operations module 124 may inform the demodulator 114 of a modulation pattern anticipated for transmissions from the gNB 160.

The UE operations module 124 may provide information 136 to the decoder 108. For example, the UE operations module 124 may inform the decoder 108 of an anticipated encoding for transmissions from the gNB 160.

The UE operations module 124 may provide information 142 to the encoder 150. The information 142 may include data to be encoded and/or instructions for encoding. For example, the UE operations module 124 may instruct the encoder 150 to encode transmission data 146 and/or other information 142. The other information 142 may include PDSCH HARQ-ACK information.

The encoder 150 may encode transmission data 146 and/or other information 142 provided by the UE operations module 124. For example, encoding the data 146 and/or other information 142 may involve error detection and/or correction coding, mapping data to space, time and/or frequency resources for transmission, multiplexing, etc. The encoder 150 may provide encoded data 152 to the modulator 154.

The UE operations module 124 may provide information 144 to the modulator 154. For example, the UE operations module 124 may inform the modulator 154 of a modulation type (e.g., constellation mapping) to be used for transmissions to the gNB 160. The modulator 154 may modulate the encoded data 152 to provide one or more modulated signals 156 to the one or more transmitters 158.

The UE operations module 124 may provide information 140 to the one or more transmitters 158. This information 140 may include instructions for the one or more transmitters 158. For example, the UE operations module 124 may instruct the one or more transmitters 158 when to transmit a signal to the gNB 160. For instance, the one or more transmitters 158 may transmit during a UL subframe. The one or more transmitters 158 may upconvert and transmit the modulated signal(s) 156 to one or more gNBs 160.

Each of the one or more gNBs 160 may include one or more transceivers 176, one or more demodulators 172, one or more decoders 166, one or more encoders 109, one or more modulators 113, a data buffer 162, and a gNB operations module 182. For example, one or more reception and/or transmission paths may be implemented in a gNB 160. For convenience, only a single transceiver 176, decoder 166, demodulator 172, encoder 109, and modulator 113 are illustrated in the gNB 160, though multiple parallel elements (e.g., transceivers 176, decoders 166, demodulators 172, encoders 109, and modulators 113) may be implemented.

The transceiver 176 may include one or more receivers 178 and one or more transmitters 117. The one or more receivers 178 may receive signals from the UE 102 using one or more antennas 180a-n. For example, the receiver 178 may receive and downconvert signals to produce one or more received signals 174. The one or more received signals 174 may be provided to a demodulator 172. The one or more transmitters 117 may transmit signals to the UE 102 using one or more antennas 180a-n. For example, the one or more transmitters 117 may upconvert and transmit one or more modulated signals 115.

The demodulator 172 may demodulate the one or more received signals 174 to produce one or more demodulated signals 170. The one or more demodulated signals 170 may be provided to the decoder 166. The gNB 160 may use the decoder 166 to decode signals. The decoder 166 may produce one or more decoded signals 164, 168. For example, a first eNB-decoded signal 164 may comprise received payload data, which may be stored in a data buffer 162. A second eNB-decoded signal 168 may comprise overhead data and/or control data. For example, the second eNB decoded signal 168 may provide data (e.g., PDSCH HARQ-ACK information) that may be used by the gNB operations module 182 to perform one or more operations.

In general, the gNB operations module 182 may enable the gNB 160 to communicate with the one or more UEs 102. The gNB operations module 182 may include a gNB scheduling module 194. The gNB scheduling module 194 may perform operations for PUCCH repetition as described herein.

The gNB operations module 182 may provide information 188 to the demodulator 172. For example, the gNB operations module 182 may inform the demodulator 172 of a modulation pattern anticipated for transmissions from the UE(s) 102.

The gNB operations module 182 may provide information 186 to the decoder 166. For example, the gNB operations module 182 may inform the decoder 166 of an anticipated encoding for transmissions from the UE(s) 102.

The gNB operations module 182 may provide information 101 to the encoder 109. The information 101 may include data to be encoded and/or instructions for encoding. For example, the gNB operations module 182 may instruct the encoder 109 to encode information 101, including transmission data 105.

The encoder 109 may encode transmission data 105 and/or other information included in the information 101 provided by the gNB operations module 182. For example, encoding the data 105 and/or other information included in the information 101 may involve error detection and/or correction coding, mapping data to space, time and/or frequency resources for transmission, multiplexing, etc. The encoder 109 may provide encoded data 111 to the modulator 113. The transmission data 105 may include network data to be relayed to the UE 102.

The gNB operations module 182 may provide information 103 to the modulator 113. This information 103 may include instructions for the modulator 113. For example, the gNB operations module 182 may inform the modulator 113 of a modulation type (e.g., constellation mapping) to be used for transmissions to the UE(s) 102. The modulator 113 may modulate the encoded data 111 to provide one or more modulated signals 115 to the one or more transmitters 117.

The gNB operations module 182 may provide information 192 to the one or more transmitters 117. This information 192 may include instructions for the one or more transmitters 117. For example, the gNB operations module 182 may instruct the one or more transmitters 117 when to (or when not to) transmit a signal to the UE(s) 102. The one or more transmitters 117 may upconvert and transmit the modulated signal(s) 115 to one or more UEs 102.

It should be noted that a DL subframe may be transmitted from the gNB 160 to one or more UEs 102 and that a UL subframe may be transmitted from one or more UEs 102 to the gNB 160. Furthermore, both the gNB 160 and the one or more UEs 102 may transmit data in a standard special subframe.

It should also be noted that one or more of the elements or parts thereof included in the eNB(s) 160 and UE(s) 102 may be implemented in hardware. For example, one or more of these elements or parts thereof may be implemented as a chip, circuitry or hardware components, etc. It should also be noted that one or more of the functions or methods described herein may be implemented in and/or performed using hardware. For example, one or more of the methods described herein may be implemented in and/or realized using a chipset, an application-specific integrated circuit (ASIC), a large-scale integrated circuit (LSI) or integrated circuit, etc.

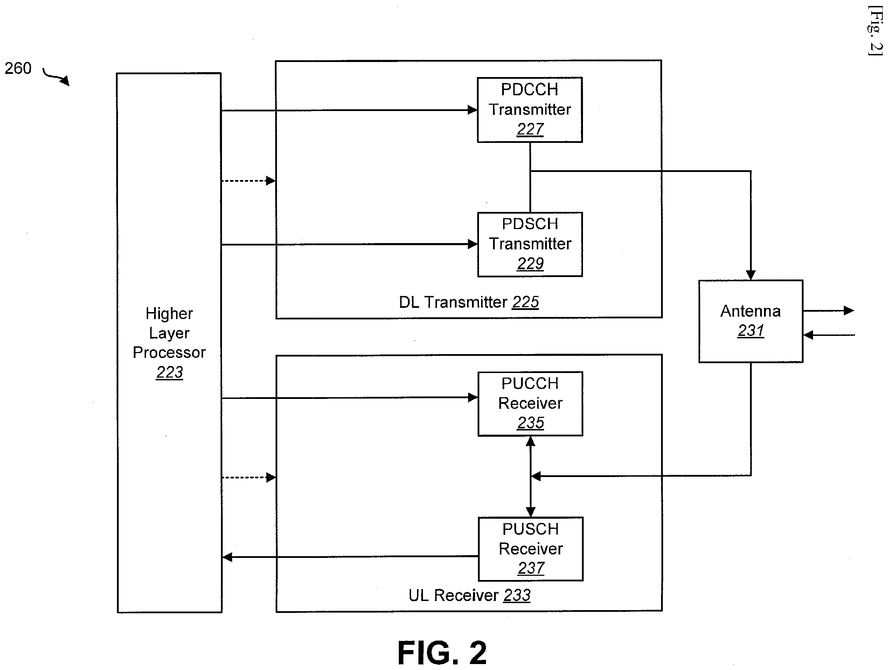

Figure 2 is a block diagram illustrating one implementation of a gNB 260. The gNB 260 may be implemented in accordance with the gNB 160 described in connection with Figure 1 in some examples, and/or may perform one or more of the functions described herein. The gNB 260 may include a higher layer processor 223, a DL transmitter 225, a UL receiver 233, and one or more antenna 231. The DL transmitter 225 may include a PDCCH transmitter 227 and a PDSCH transmitter 229. The UL receiver 233 may include a PUCCH receiver 235 and a PUSCH receiver 237.

The higher layer processor 223 may manage physical layer's behaviors (the DL transmitter's and the UL receiver's behaviors) and provide higher layer parameters to the physical layer. The higher layer processor 223 may obtain transport blocks from the physical layer. The higher layer processor 223 may send/acquire higher layer messages such as an RRC message and MAC message to/from a UE's higher layer. The higher layer processor 223 may provide the PDSCH transmitter transport blocks and provide the PDCCH transmitter transmission parameters related to the transport blocks.

The DL transmitter 225 may multiplex downlink physical channels and downlink physical signals (including reservation signal) and transmit them via transmission antennas 231. The UL receiver 233 may receive multiplexed uplink physical channels and uplink physical signals via receiving antennas 231 and de-multiplex them. The PUCCH receiver 235 may provide the higher layer processor 223 UCI. The PUSCH receiver 237 may provide the higher layer processor 223 received transport blocks.

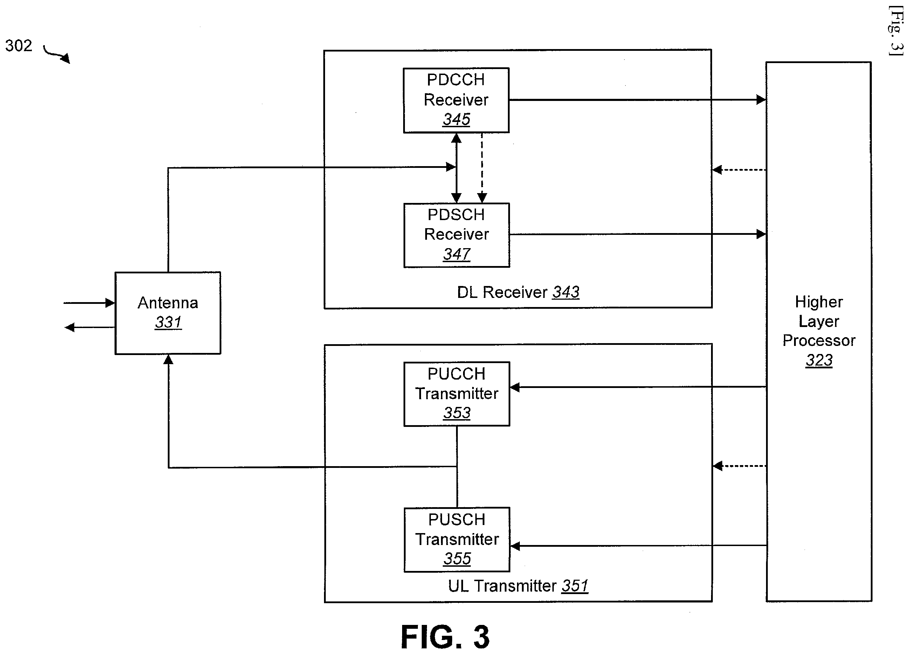

Figure 3 is a block diagram illustrating one implementation of a UE 302. The UE 302 may be implemented in accordance with the UE 102 described in connection with Figure 1 in some examples, and/or may perform one or more of the functions described herein. The UE 302 may include a higher layer processor 323, a UL transmitter 351, a DL receiver 343, and one or more antenna 331. The UL transmitter 351 may include a PUCCH transmitter 353 and a PUSCH transmitter 355. The DL receiver 343 may include a PDCCH receiver 345 and a PDSCH receiver 347.

The higher layer processor 323 may manage physical layer's behaviors (the UL transmitter's and the DL receiver's behaviors) and provide higher layer parameters to the physical layer. The higher layer processor 323 may obtain transport blocks from the physical layer. The higher layer processor 323 may send/acquire higher layer messages such as an RRC message and MAC message to/from a UE's higher layer. The higher layer processor 323 may provide the PUSCH transmitter transport blocks and provide the PUCCH transmitter 353 UCI.

The DL receiver 343 may receive multiplexed downlink physical channels and downlink physical signals via receiving antennas 331 and de-multiplex them. The PDCCH receiver 345 may provide the higher layer processor 323 DCI. The PDSCH receiver 347 may provide the higher layer processor 323 received transport blocks.

It should be noted that names of physical channels described herein are examples. The other names such as "NRPDCCH, NRPDSCH, NRPUCCH and NRPUSCH", "new Generation-(G)PDCCH, GPDSCH, GPUCCH and GPUSCH" or the like can be used.

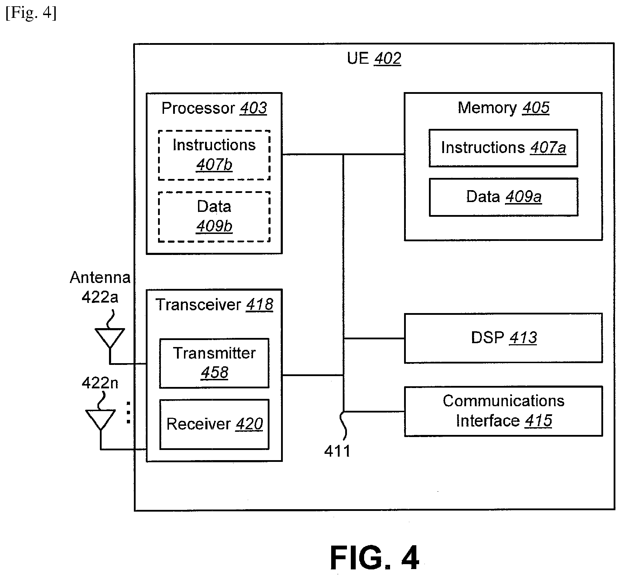

Figure 4 illustrates various components that may be utilized in a UE 402. The UE 402 described in connection with Figure 4 may be implemented in accordance with the UE 102 described in connection with Figure 1. The UE 402 includes a processor 403 that controls operation of the UE 402. The processor 403 may also be referred to as a central processing unit (CPU). Memory 405, which may include read-only memory (ROM), random access memory (RAM), a combination of the two or any type of device that may store information, provides instructions 407a and data 409a to the processor 403. A portion of the memory 405 may also include non-volatile randomaccess memory (NVRAM). Instructions 407b and data 409b may also reside in the processor 403. Instructions 407b and/or data 409b loaded into the processor 403 may also include instructions 407a and/or data 409a from memory 405 that were loaded for execution or processing by the processor 403. The instructions 407b may be executed by the processor 403 to implement the methods described above.

The UE 402 may also include a housing that contains one or more transmitters 458 and one or more receivers 420 to allow transmission and reception of data. The transmitter(s) 458 and receiver(s) 420 may be combined into one or more transceivers 418. One or more antennas 422a-n are attached to the housing and electrically coupled to the transceiver 418.

The various components of the UE 402 are coupled together by a bus system 411, which may include a power bus, a control signal bus, and a status signal bus, in addition to a data bus. However, for the sake of clarity, the various buses are illustrated in Figure 4 as the bus system 411. The UE 402 may also include a digital signal processor (DSP) 413 for use in processing signals. The UE 402 may also include a communications interface 415 that provides user access to the functions of the UE 402. The UE 402 illustrated in Figure 4 is a functional block diagram rather than a listing of specific components.

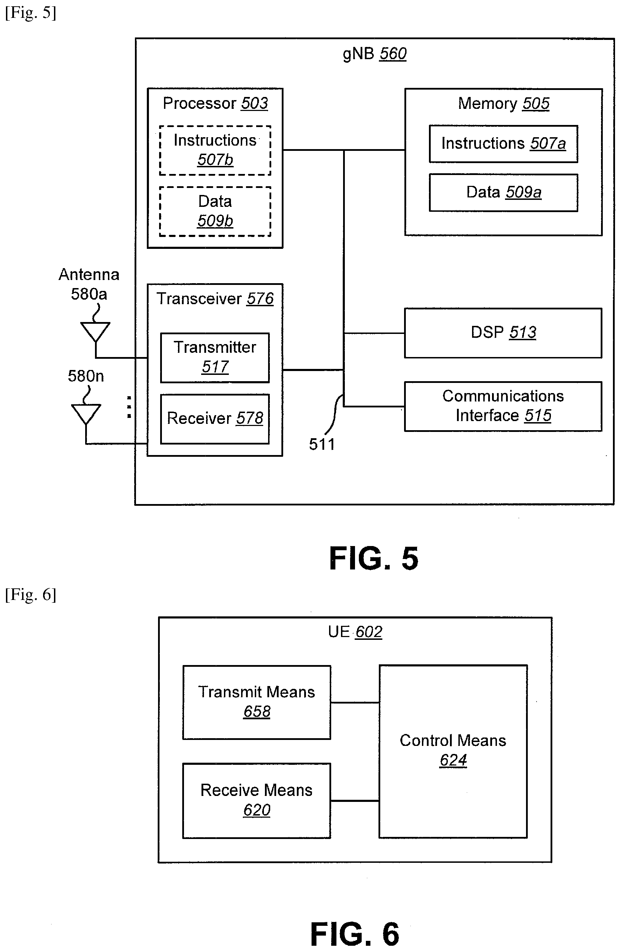

Figure 5 illustrates various components that may be utilized in a gNB 560. The gNB 560 described in connection with Figure 5 may be implemented in accordance with the gNB 160 described in connection with Figure 1. The gNB 560 includes a processor 503 that controls operation of the gNB 560. The processor 503 may also be referred to as a central processing unit (CPU). Memory 505, which may include read-only memory (ROM), random access memory (RAM), a combination of the two or any type of device that may store information, provides instructions 507a and data 509a to the processor 503. A portion of the memory 505 may also include non-volatile randomaccess memory (NVRAM). Instructions 507b and data 509b may also reside in the processor 503. Instructions 507b and/or data 509b loaded into the processor 503 may also include instructions 507a and/or data 509a from memory 505 that were loaded for execution or processing by the processor 503. The instructions 507b may be executed by the processor 503 to implement the methods described above.

The gNB 560 may also include a housing that contains one or more transmitters 517 and one or more receivers 578 to allow transmission and reception of data. The transmitter(s) 517 and receiver(s) 578 may be combined into one or more transceivers 576. One or more antennas 580a-n are attached to the housing and electrically coupled to the transceiver 576.

The various components of the gNB 560 are coupled together by a bus system 511, which may include a power bus, a control signal bus, and a status signal bus, in addition to a data bus. However, for the sake of clarity, the various buses are illustrated in Figure 5 as the bus system 511. The gNB 560 may also include a digital signal processor (DSP) 513 for use in processing signals. The gNB 560 may also include a communications interface 515 that provides user access to the functions of the gNB 560. The gNB 560 illustrated in Figure 5 is a functional block diagram rather than a listing of specific components.

Figure 6 is a block diagram illustrating one implementation of a UE 602 in which the systems and methods described herein may be implemented. The UE 602 includes transmit means 658, receive means 620 and control means 624. The transmit means 658, receive means 620 and control means 624 may be configured to perform one or more of the functions described in connection with Figure 1 above. Figure 4 above illustrates one example of a concrete apparatus structure of Figure 6. Other various structures may be implemented to realize one or more of the functions of Figure 1. For example, a DSP may be realized by software.

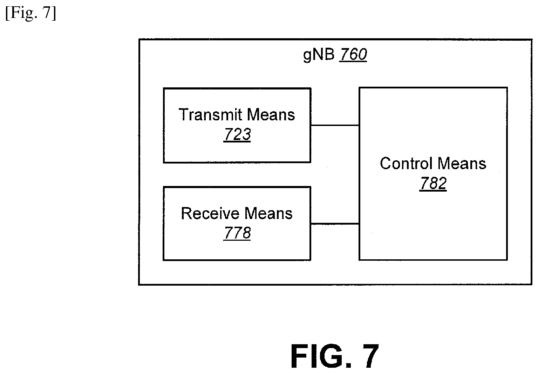

Figure 7 is a block diagram illustrating one implementation of a gNB 760 in which the systems and methods described herein may be implemented. The gNB 760 includes transmit means 723, receive means 778 and control means 782. The transmit means 723, receive means 778 and control means 782 may be configured to perform one or more of the functions described in connection with Figure 1 above. Figure 5 above illustrates one example of a concrete apparatus structure of Figure 7. Other various structures may be implemented to realize one or more of the functions of Figure 1. For example, a DSP may be realized by software.

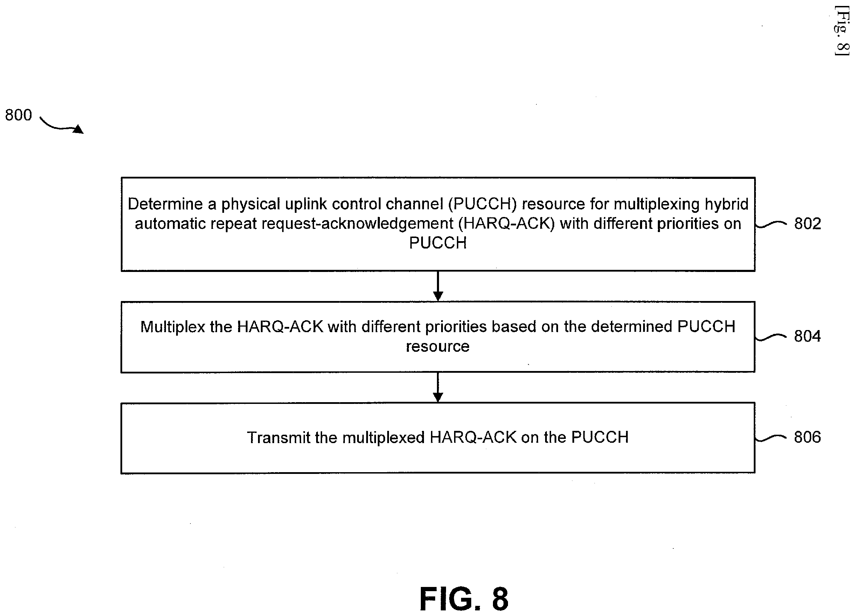

Figure 8 is a flow diagram illustrating a method 800 by a UE 102 for PUCCH resource selection and multiplexing of HARQ-ACK with different priorities on PUCCH. The UE 102 may determine 802 a physical uplink control channel (PUCCH) resource for multiplexing hybrid automatic repeat request-acknowledgement (HARQ-ACK) with different priorities on PUCCH. The UE 102 may multiplex 804 the HARQ-ACK with different priorities based on the determined PUCCH resource. The UE 102 may transmit 806 the multiplexed HARQ-ACK on the PUCCH.

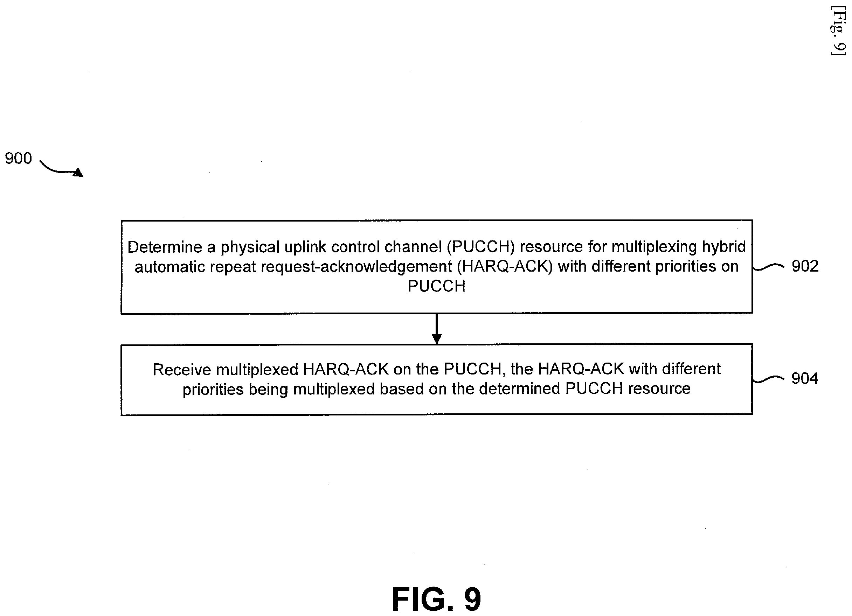

Figure 9 is a flow diagram illustrating a method 900 by a gNB 160 for code rate determination for multiplexing of HARQ-ACK with different priorities on PUCCH with separate coding. The gNB 160 may determine 902 a physical uplink control channel (PUCCH) resource for multiplexing hybrid automatic repeat request-acknowledgement (HARQ-ACK) with different priorities on PUCCH. The gNB 160 may receive 904 multiplexed HARQ-ACK on the PUCCH. The HARQ-ACK with different priorities may be multiplexed based on the determined PUCCH resource.

The term "computer-readable medium" refers to any available medium that can be accessed by a computer or a processor. The term "coputer-readable medium," as used herein, may denote a computer- and/or processor-readable medium that is non-transitory and tangible. By way of example, and not limitation, a comptuer-readable or processor-readable medium may comprise RAM, ROM, EEPRIOM, CD-ROM or other optical disk storage, magnetic disk storage or other magnetic storage devices, or any other medium that can be used to carry or store desired program code in the form of instructions or data structures, and that can be accessed by aq computer or processor. Disk and disc, as used herein, includes compact disc (CD), laser disc, optical disc, digital versatile disc (DVD), floppy disk, and Blu-ray® disc where disks usually reproduce data magnetically, while discs reproduce data optically with lasers.

It should be noted that one or more of the methods described herein may be implemented in and/or performed using hardware. For example, one or more of the methods described herein may be implemented in and/or realized using a chipset, an application-specific integrated circuit (ASIC), a large-scale integrated circuit (LSI) or integrated circuit, etc.

Each of the methods disclosed herein comprises one or more steps or actions for achieving the described method. The method steps and/or actions may be interchanged with one another and/or combined into a single step. In other words, unless a specific order of steps or actions is required for proper operation of the method that is being described, the order and/or use of specific steps and/or actions may be modified.

It is to be understood that the claims are not limited to the precise configuration and components illustrated above. Various modifications, changes, and variations may be made in the arrangement, operation, and details of the systems, methods, and apparatus described herein. The scope of protection is defined by the appended claims.

A program running on the gNB 160 or the UE 102 according to the described systems and methods is a program (a program for causing a computer to operate) that controls a CPU and the like in such a manner as to realize the function according to the described systems and methods. Then, the information that is handled in these apparatuses is temporarily stored in a RAM while being processed. Thereafter, the information is stored in various ROMs or HDDs, and whenever necessary, is read by the CPU to be modified or written. As a recording medium on which the program is stored, among a semiconductor (for example, a ROM, a nonvolatile memory card, and the like), an optical storage medium (for example, a DVD, a MO, a MD, a CD, a BD, and the like), a magnetic storage medium (for example, a magnetic tape, a flexible disk, and the like), and the like, any one may be possible. Furthermore, in some cases, the function according to the described systems and methods described above is realized by running the loaded program, and in addition, the function according to the described systems and methods is realized in conjunction with an operating system or other application programs, based on an instruction from the program.

Furthermore, in a case where the programs are available on the market, the program stored on a portable recording medium can be distributed or the program can be transmitted to a server computer that connects through a network such as the Internet. In this case, a storage device in the server computer also is included. Furthermore, some or all of the gNB 160 and the UE 102 according to the systems and methods described above may be realized as an LSI that is a typical integrated circuit. Each functional block of the gNB 160 and the UE 102 may be individually built into a chip, and some or all functional blocks may be integrated into a chip. Furthermore, a technique of the integrated circuit is not limited to the LSI, and an integrated circuit for the functional block may be realized with a dedicated circuit or a general-purpose processor. Furthermore, if with advances in a semiconductor technology, a technology of an integrated circuit that substitutes for the LSI appears, it is also possible to use an integrated circuit to which the technology applies.

Moreover, each functional block or various features of the base station device and the terminal device used in each of the aforementioned implementations may be implemented or executed by a circuitry, which is typically an integrated circuit or a plurality of integrated circuits. The circuitry designed to execute the functions described in the present specification may comprise a general-purpose processor, a digital signal processor (DSP), an application specific or general application integrated circuit (ASIC), a field programmable gate array (FPGA), or other programmable logic devices, discrete gates or transistor logic, or a discrete hardware component, or a combination thereof. The general-purpose processor may be a microprocessor, or alternatively, the processor may be a conventional processor, a controller, a microcontroller, or a state machine. The general-purpose processor or each circuit described above may be configured by a digital circuit or may be configured by an analogue circuit. Further, when a technology of making into an integrated circuit superseding integrated circuits at the present time appears due to advancement of a semiconductor technology, the integrated circuit by this technology is also able to be used.

As used herein, the term "and/or" should be interpreted to mean one or more items. For example, the phrase "A, B, and/or C" should be interpreted to mean any of: only A, only B, only C, A and B (but not C), B and C (but not A), A and C (but not B), or all of A, B, and C. As used herein, the phrase "at least one of" should be interpreted to mean one or more items. For example, the phrase "at least one of A, B and C" or the phrase "at least one of A, B or C" should be interpreted to mean any of: only A, only B, only C, A and B (but not C), B and C (but not A), A and C (but not B), or all of A, B, and C. As used herein, the phrase "one or more of" should be interpreted to mean one or more items. For example, the phrase "one or more of A, B and C" or the phrase "one or more of A, B or C" should be interpreted to mean any of: only A, only B, only C, A and B (but not C), B and C (but not A), A and C (but not B), or all of A, B, and C.

## Claims

1. A user equipment (102, 302, 402, 602), comprising:
   a processor (124, 323, 403, 624) configured to:

   determine a physical uplink control channel, PUCCH, resource for multiplexing uplink control information, UCI, with different priorities on a PUCCH, wherein the UCI with different priorities consists of first UCI with a high priority and second UCI with a low priority, the PUCCH resource is determined based on a payload size of a first hybrid automatic repeat request-acknowledgements, HARQ-ACK, and a payload size of a second HARQ-ACK, the first UCI is the first HARQ-ACK with a Scheduling Request, SR, and the second UCI is the second HARQ-ACK,
   encode the UCI with different priorities by separately encoding the first UCI and the second UCI based on a first maximum code rate for the first UCI and a second maximum code rate for the second UCI, respectively, wherein the first maximum code rate and the second maximum code rate are separately configured, and
   multiplex the encoded UCI with different priorities; and
   a transmitter (158, 351, 458, 658) configured to transmit the multiplexed UCI with different priorities on the PUCCH.

2. A method performed by a user equipment (102, 302, 402, 602), the method comprising:

   determining a physical uplink control channel, PUCCH, resource for multiplexing uplink control information, UCI, with different priorities on a PUCCH, wherein the UCI with different priorities consists of first UCI with a high priority and second UCI with a low priority, the PUCCH resource is determined based on a payload size of a first hybrid automatic repeat request-acknowledgements, HARQ-ACK, and a payload size of a second HARQ-ACK, the first UCI is the first HARQ-ACK with a Scheduling Request, SR, and the second UCI is the second HARQ-ACK;

encode the UCI with different priorities by separately encoding the first UCI and the second UCI based on a first maximum code rate for the first UCI and a second maximum code rate for the second UCI, respectively, wherein the first maximum code rate and the second maximum code rate are separately configured;

multiplexing the encoded UCI with different priorities; and

transmitting the multiplexed UCI with different priorities on the PUCCH.

**3.** A base station (160, 260, 560, 760), comprising:
a processor (182, 223, 503, 782) configured to:

determine a physical uplink control channel, PUCCH, resource for multiplexing uplink control information, UCI, with different priorities on a PUCCH, wherein the UCI with different priorities consists of first UCI with a high priority and second UCI with a low priority, the PUCCH resource is determined based on a payload size of a first hybrid automatic repeat request-acknowledgements, HARQ-ACK, and a payload size of a second HARQ-ACK, the first UCI is the first HARQ-ACK with a Scheduling Request, SR, and the second UCI is the second HARQ-ACK; and

a receiver (178, 235, 578, 778) configured to receive the UCI with different priorities on the PUCCH, in a state where a) the first UCI and the second UCI are separately encoded based on a first maximum code rate for the first UCI and a second maximum code rate for the second UCI, respectively, and b) the encoded first UCI and the encoded second UCI are multiplexed on the PUCCH, wherein the first maximum code rate and the second maximum code rate are separately configured, wherein

the processor (182, 223, 503, 782) is configured to cause a decoder (166) to produce the UCI with different priorities.

**Patentansprüche**

**1.** Ein Benutzergerät (102, 302, 402, 602), das Folgendes umfasst:
einen Prozessor (124, 323, 403, 624), der konfiguriert ist, zum:

Bestimmen einer physikalischen Uplink-Steuerkanal (*physical uplink control channel* - PUCCH) -Ressource zum Multiplexen von Uplink-Steuerinformationen (*uplink control information* - UCI) mit unterschiedlichen Prioritäten auf einem PUCCH, wobei die UCI mit unterschiedlichen Prioritäten aus einer ersten UCI mit einer hohen Priorität und einer zweiten UCI mit einer niedrigen Priorität besteht, wobei die PUCCH-Ressource bestimmt wird auf der Grundlage einer Nutzlastgröße einer ersten HARQ-ACK (*Hybrid Automatic Repeat Request Acknowledgement*) und einer Nutzlastgröße einer zweiten HARQ-ACK, wobei die erste UCI die erste HARQ-ACK mit einer SR (*Scheduling Request*) ist und die zweite UCI die zweite HARQ-ACK ist,

Codieren der UCI mit unterschiedlichen Prioritäten durch separates Codieren der ersten UCI und der zweiten UCI auf der Grundlage jeweils einer ersten maximalen Codierungsrate für die erste UCI und einer zweiten maximalen Codierungsrate für die zweite UCI, wobei die erste maximale Codierungsrate und die zweite maximale Codierungsrate separat konfiguriert sind, und

Multiplexen der codierten UCI mit unterschiedlichen Prioritäten; und

einen Sender (158, 351, 458, 658), der konfiguriert ist, um die gemultiplexten UCI mit unterschiedlichen Prioritäten auf dem PUCCH zu senden.

**2.** Ein Verfahren, das von einem Benutzergerät (102, 302, 402, 602) durchgeführt wird, wobei das Verfahren Folgendes umfasst:

Bestimmen einer physikalischen Uplink-Steuerkanal (*physical uplink control channel* - PUCCH) -Ressource zum Multiplexen von Uplink-Steuerinformationen (*uplink control information* - UCI) mit unterschiedlichen Prioritäten auf einem PUCCH, wobei die UCI mit unterschiedlichen Prioritäten aus einer ersten UCI mit einer hohen Priorität und einer zweiten UCI mit einer niedrigen Priorität besteht, wobei die PUCCH-Ressource bestimmt wird auf der Grundlage einer Nutzlastgröße einer ersten HARQ-ACK (*Hybrid Automatic Repeat Request Acknowledgement*) und einer Nutzlastgröße einer zweiten HARQ-ACK, wobei die erste UCI die erste HARQ-ACK mit einer SR (*Scheduling Request*) ist und die zweite UCI die zweite HARQ-ACK ist;

Codieren der UCI mit unterschiedlichen Prioritäten durch separates Codieren der ersten UCI und der zweiten UCI auf der Grundlage jeweils einer ersten maximalen Codierungsrate für die erste UCI und einer zweiten maximalen Codierungsrate für die zweite UCI, wobei die erste maximale Codierungsrate und die zweite maximale Codierungsrate separat konfiguriert sind;

Multiplexen der codierten UCI mit unterschiedlichen Prioritäten; und

Senden der gemultiplexten UCI mit unterschiedlichen Prioritäten auf dem PUCCH.

3. Eine Basisstation (160, 260, 560, 760), umfassend:
einen Prozessor (182, 223, 503, 782), der konfiguriert ist, zum:

Bestimmen einer physikalischen Uplink-Steuerkanal (*physical uplink control channel* - PUCCH) -Ressource zum Multiplexen von Uplink-Steuerinformationen (*uplink control information* - UCI) mit unterschiedlichen Prioritäten auf einem PUCCH, wobei die UCI mit unterschiedlichen Prioritäten aus einer ersten UCI mit einer hohen Priorität und einer zweiten UCI mit einer niedrigen Priorität besteht, wobei die PUCCH-Ressource bestimmt wird auf der Grundlage einer Nutzlastgröße einer ersten HARQ-ACK (*Hybrid Automatic Repeat Request Acknowledgement*) und einer Nutzlastgröße einer zweiten HARQ-ACK, wobei die erste UCI die erste HARQ-ACK mit einer SR (*Scheduling Request*) ist und die zweite UCI die zweite HARQ-ACK ist; und
einen Empfänger (178, 235, 578, 778), der konfiguriert ist, um die UCI mit unterschiedlichen Prioritäten auf dem PUCCH zu empfangen, in einem Zustand, in dem a) die erste UCI und die zweite UCI separat codiert sind, basierend jeweils auf einer ersten maximalen Codierungsrate für die erste UCI und einer zweiten maximalen Codierungsrate für die zweite UCI, und b) die codierte erste UCI und die codierte zweite UCI auf dem PUCCH gemultiplext sind, wobei die erste maximale Codierungsrate und die zweite maximale Codierungsrate separat konfiguriert sind, wobei
der Prozessor (182, 223, 503, 782) konfiguriert ist, um einen Decoder (166) zu veranlassen, die UCI mit unterschiedlichen Prioritäten zu erzeugen.

**Revendications**

1. Un équipement utilisateur (102, 302, 402, 602) comprenant :
un processeur (124, 323, 403, 624) configuré pour :

déterminer une ressource de canal de commande physique de liaison montante (*physical uplink control channel* - PUCCH) pour multiplexer des informations de contrôle de liaison montante, (*uplink control information* - UCI) avec différentes priorités sur un PUCCH, sachant que les UCI avec différentes priorités se composent d'une première UCI avec une haute priorité et d'une deuxième UCI avec une basse priorité, la ressource PUCCH est déterminée sur la base d'une taille de charge utile d'un premier accusé de réception pour la demande de répétition automatique hybride (*hybrid automatic repeat request acknowledgement* - HARQ-ACK) et d'une taille de charge utile d'un deuxième HARQ-ACK, la première UCI étant la première HARQ-ACK avec une demande d'ordonnancement (*Scheduling Request* - SR) et la deuxième UCI étant le deuxième HARQ-ACK,
coder les UCI avec différentes priorités en codant séparément la première UCI et la deuxième UCI sur la base d'un premier taux de codage maximal pour la première UCI et d'un deuxième taux de codage maximal pour la deuxième UCI, respectivement, sachant que le premier taux de codage maximal et le deuxième taux de codage maximal sont configurés séparément, et pour
multiplexer avec différentes priorités les UCI codées; et
un émetteur (158, 351, 458, 658) configuré pour transmettre les UCI multiplexées avec différentes priorités sur le PUCCH.

2. Un procédé mis en œuvre par un équipement utilisateur (102, 302, 402, 602), le procédé comprenant le fait de :

déterminer une ressource de canal de commande physique de liaison montante (*physical uplink control channel* - PUCCH) pour multiplexer des informations de contrôle de liaison montante, (*uplink control information* - UCI) avec différentes priorités sur un PUCCH, sachant que les UCI avec différentes priorités se composent d'une première UCI avec une haute priorité et d'une deuxième UCI avec une basse priorité, la ressource PUCCH est déterminée sur la base d'une taille de charge utile d'un premier accusé de réception pour la demande de répétition automatique hybride (*hybrid automatic repeat request acknowledgement* - HARQ-ACK) et d'une taille de charge utile d'un deuxième HARQ-ACK, la première UCI étant la première HARQ-ACK avec une demande d'ordonnancement (*Scheduling Request* - SR) et la deuxième UCI étant le deuxième HARQ-ACK ;
coder les UCI avec différentes priorités en codant séparément la première UCI et la deuxième UCI sur la base d'un premier taux de codage maximal pour la première UCI et d'un deuxième taux de codage maximal pour la deuxième UCI, respectivement, sachant que le premier taux de codage maximal et le deuxième taux de codage maximal sont configurés séparément ;
multiplexer avec différentes priorités les UCI codées; et de

transmettre les UCI multiplexées avec différentes priorités sur le PUCCH.

3.  Une station de base (160, 260, 560, 760) comprenant :
    un processeur (182, 223, 503, 782) configuré pour :

    déterminer une ressource de canal de commande physique de liaison montante (*physical uplink control channel -* PUCCH) pour multiplexer des informations de contrôle de liaison montante, (*uplink control information -* UCI) avec différentes priorités sur un PUCCH, sachant que les UCI avec différentes priorités se composent d'une première UCI avec une haute priorité et d'une deuxième UCI avec une basse priorité, la ressource PUCCH est déterminée sur la base d'une taille de charge utile d'un premier accusé de réception pour la demande de répétition automatique hybride (*hybrid automatic repeat request acknowledgement -* HARQ-ACK) et d'une taille de charge utile d'un deuxième HARQ-ACK, la première UCI étant la première HARQ-ACK avec une demande d'ordonnancement (*Scheduling Request -* SR) et la deuxième UCI étant le deuxième HARQ-ACK ; et un récepteur (178, 235, 578, 778) configuré pour recevoir les UCI avec différentes priorités sur le PUCCH, dans un état où a) la première UCI et la deuxième UCI sont codées séparément sur la base d'un premier taux de codage maximal pour la première UCI et d'un deuxième taux de codage maximal pour la deuxième UCI, respectivement, et où b) la première UCI codée et la deuxième UCI codée sont multiplexées sur le PUCCH, sachant que le premier taux de codage maximal et le deuxième taux de codage maximal sont configurés séparément, sachant que le processeur (182, 223, 503, 782) est configuré pour amener un décodeur (166) à produire les UCI avec différentes priorités.

[Fig. 1]

FIG. 1

[Fig. 2]

**FIG. 2**

[Fig. 3]

FIG. 3

[Fig. 4]

## FIG. 4

[Fig. 5]

## FIG. 5

[Fig. 6]

## FIG. 6

[Fig. 7]

gNB _760_

Transmit Means
_723_

Receive Means
_778_

Control Means
_782_

# FIG. 7

[Fig. 8]

EP 4 193 659 B1

800

Determine a physical uplink control channel (PUCCH) resource for multiplexing hybrid automatic repeat request-acknowledgement (HARQ-ACK) with different priorities on PUCCH — 802

Multiplex the HARQ-ACK with different priorities based on the determined PUCCH resource — 804

Transmit the multiplexed HARQ-ACK on the PUCCH — 806

# FIG. 8

[Fig. 9]

EP 4 193 659 B1

900

| Determine a physical uplink control channel (PUCCH) resource for multiplexing hybrid automatic repeat request-acknowledgement (HARQ-ACK) with different priorities on PUCCH | 902 |

| Receive multiplexed HARQ-ACK on the PUCCH, the HARQ-ACK with different priorities being multiplexed based on the determined PUCCH resource | 904 |

# FIG. 9

## REFERENCES CITED IN THE DESCRIPTION

**Non-patent literature cited in the description**

- **OPPO**. Summary of email thread [100b-e-NR-Llenh_URLLC-UCI_Enh-01. *3GPP Draft R1-2002783*, 20 April 2020
- **OPPO**. Summary of email discussion [97-NR-05] on handling intra-UE collision scenarios for URLLC UCI enhancements. *3GPP Draft R1-1909492*, 26 August 2019
- **LG ELECTRONICS**. Intra-UE prioritization for NR URLLC. *3GPP Draft R1-1902051*, 25 February 2019